(19)

Europäisches
Patentamt
European
Patent Office
Office européen
des brevets

(11) **EP 4 318 310 B1**

(12) **EUROPEAN PATENT SPECIFICATION**

(45) Date of publication and mention
of the grant of the patent:
**24.06.2026 Bulletin 2026/26**

(21) Application number: **22787608.3**

(22) Date of filing: **14.04.2022**

(51) International Patent Classification (IPC):
**G06N 3/02** *(2006.01)*   **G06N 3/08** *(2023.01)*
**G06N 3/048** *(2023.01)*   **G06N 3/096** *(2023.01)*
**G06N 3/098** *(2023.01)*   **G06N 3/0455** *(2023.01)*

(52) Cooperative Patent Classification (CPC):
**G06N 3/098; G06N 3/0455; G06N 3/0499;**
**G06N 3/084; G06N 3/09;** G06N 3/048; G06N 3/096

(86) International application number:
**PCT/CN2022/086900**

(87) International publication number:
**WO 2022/218386 (20.10.2022 Gazette 2022/42)**

(54) **DISTRIBUTED LEARNING METHOD AND DEVICE**

VERFAHREN UND VORRICHTUNG FÜR VERTEILTES LERNEN

PROCÉDÉ ET DISPOSITIF D'APPRENTISSAGE DISTRIBUÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.04.2021   CN 202110413617**

(43) Date of publication of application:
**07.02.2024 Bulletin 2024/06**

(73) Proprietor: **Huawei Technologies Co., Ltd.**
**Shenzhen, Guangdong 518129 (CN)**

(72) Inventors:
• **ZHANG, Gongzheng**
**Shenzhen, Guangdong 518129 (CN)**
• **XU, Chen**
**Shenzhen, Guangdong 518129 (CN)**
• **LI, Rong**
**Shenzhen, Guangdong 518129 (CN)**
• **WANG, Jian**
**Shenzhen, Guangdong 518129 (CN)**
• **WANG, Jun**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 105 682 238    CN-A- 112 054 863
CN-A- 112 188 504    US-A1- 2020 167 687

• SEBASTIAN D\"ORNER ET AL: "Deep Learning-Based Communication Over the Air", ARXIV.ORG, CORNELL UNIVERSITY LIBRARY, 201 OLIN LIBRARY CORNELL UNIVERSITY ITHACA, NY 14853, 11 July 2017 (2017-07-11), XP081279898, DOI: 10.1109/JSTSP.2017.2784180
• ANONYMOUS SHEN: "PyTorch Distributed Overview - PyTorch Tutorials 1.7.0 documentation", 30 November 2020 (2020-11-30), pages 1 - 3, XP093202941, Retrieved from the Internet <URL:https://web.archive.org/web/20201130214247/https://pytorch.org/tutorials/beginner/dist_overview.html>
• KIM DAEUN ET AL: "Supervised-Learning for Multi-Hop MU-MIMO Communications With One-Bit Transceivers", IEEE JOURNAL ON SELECTED AREAS IN COMMUNICATIONS, IEEE SERVICE CENTER, PISCATAWAY, US, vol. 37, no. 11, 1 November 2019 (2019-11-01), pages 2559 - 2572, XP011750613, ISSN: 0733-8716, [retrieved on 20191015], DOI: 10.1109/JSAC.2019.2933965

EP 4 318 310 B1

- MAHDI BOLOURSAZ MASHHADI ET AL: "Federated mmWave Beam Selection Utilizing LIDAR Data", ARXIV.ORG, CORNELL UNIVERSITY LIBRARY, 201 OLIN LIBRARY CORNELL UNIVERSITY ITHACA, NY 14853, 4 February 2021 (2021-02-04), XP081875250
- ANONYMOUS SHEN: "PyTorch Distributed Overview - PyTorch Tutorials 1.7.0 documentation", 30 November 2020 (2020-11-30), pages 1 - 3, XP93202941, Retrieved from the Internet <URL:https://web.archive.org/web/20201130214247/https://pytorch.org/tutorials/beginner/dist_overview.html>

## Description

### TECHNICAL FIELD

This application relates to the communication field, and in particular, to a distributed learning method and apparatus.

### BACKGROUND

In recent years, the artificial intelligence (artificial intelligence, AI) technology has made significant progress in fields such as machine vision and natural language processing, and can be applied to various devices, but also has high requirements on capabilities of the devices. A neural network (neural network, NN) model is used as an example. To implement training and inference on the NN model, a device needs to have powerful computing power, which is a great challenge for some devices.

To lower the requirements on the capabilities of the devices, the NN model may be segmented at an intermediate node at a specific layer or some specific layers of the NN model, and a plurality of obtained NN submodels are deployed on a plurality of devices for training and inference. Currently, operations, such as channel coding, need to be performed on intermediate layer information (a tensor or a vector) of forward propagation and intermediate layer gradient information of back propagation, and transmission is performed between the devices through channels. In this case, encoding and decoding processes occupy a large quantity of resources, resulting in a waste of resources. In addition, currently there is no technical solution that can improve performance of distributed learning.

SEBASTIAN DÖRNER ET AL: "Deep Learning-Based Communication Over the Air" describes a point-to-point communications system having a physical layer processing carried out by deep neural networks.

### SUMMARY

The scope of the invention is set out in the appended claims. This application provides a distributed learning method and apparatus, to combine wireless communication with distributed learning, which can save resources and improve performance of distributed learning in a wireless environment.

### BRIEF DESCRIPTION OF DRAWINGS

FIG. 1 is a schematic diagram of an architecture of a communication system according to an embodiment of this application;

FIG. 2 is a schematic diagram of a fully-connected neural network according to an embodiment of this application;

FIG. 3 is a schematic diagram of gradient descent according to an embodiment of this application;

FIG. 4 is a schematic diagram of neural network training according to an embodiment of this application;

FIG. 5 is a schematic diagram of a type of neural network segmentation according to an embodiment of this application;

FIG. 6 is a schematic diagram of another type of neural network segmentation according to an embodiment of this application;

FIG. 7 is a schematic diagram of still another type of neural network segmentation according to an embodiment of this application;

FIG. 8 is a schematic diagram of interaction of a distributed learning method according to an embodiment of this application;

FIG. 9A and FIG. 9B are a schematic diagram of application of a distributed learning method according to an embodiment of this application;

FIG. 10A and FIG. 10B are a schematic diagram of application of another distributed learning method according to an embodiment of this application;

FIG. 11A and FIG. 11B are a schematic diagram of application of still another distributed learning method according to an embodiment of this application;

FIG. 12(a), FIG. 12(b), and FIG. 12(c) are a schematic diagram of interaction of another distributed learning method according to an embodiment of this application;

FIG. 13 is a schematic diagram of a structure of a distributed learning apparatus according to an embodiment of this application; and

FIG. 14 is a schematic diagram of a structure of another distributed learning apparatus according to an embodiment of this application.

## DESCRIPTION OF EMBODIMENTS

The following describes technical solutions of this application with reference to the accompanying drawings.

The technical solutions in embodiments of this application may be applied to various communication systems, for example, a Wireless Fidelity (wireless fidelity, Wi-Fi) system, a vehicle to everything (vehicle to everything, V2X) communication system, a device-to-device (device-to-device, D2D) communication system, an Internet of vehicles communication system, a short-distance wireless communication system, a satellite communication system, a Narrow-Band-Internet of Things (NarrowBand-Internet of Things, NB-IoT) system, a long-term evolution (long-term evolution, LTE) system, a fifth generation (5th generation, 5G) mobile communication system such as a new radio (new radio, NR) system, and a future communication system such as a sixth generation (6th generation, 6G) mobile communication system. The technical solutions in embodiments of this application may be applied to the following application scenarios: enhanced mobile broadband (enhanced mobile broadband, eMBB), URLLC (ultra-reliable low-latency communication, URLLC), and enhanced machine-type communication (enhanced machine-type communication, eMTC).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" represent giving an example, an illustration, or a description. Any embodiment or design scheme described as an "example" in this application should not be explained as being more preferred or having more advantages than another embodiment or design scheme. Exactly, the use of the term "example" is intended to present a concept in a specific manner.

The network architecture and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

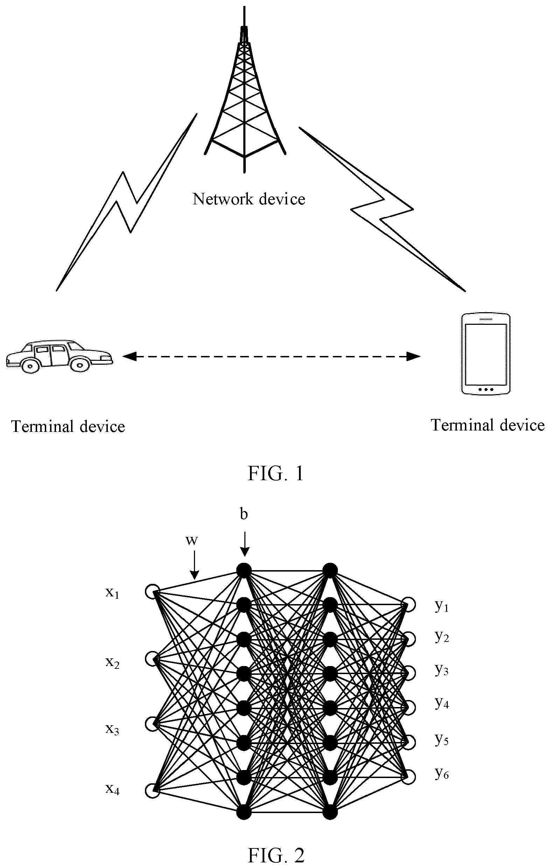

For ease of understanding embodiments of this application, the following describes in detail a communication system applicable to embodiments of this application by using a communication system shown in FIG. 1 as an example. For example, FIG. 1 is a schematic diagram of an architecture of a communication system to which a distributed learning method according to an embodiment of this application is applicable.

The communication system includes a first node and a second node. The first node may be a terminal device, and the second node may be a network device. Alternatively, the first node may be a network device, and the second node may be a terminal device. Alternatively, the first node may be a terminal device, and the second node may be a terminal device. As shown in FIG. 1, the communication system includes a terminal device, and there may be one or more terminal devices. The communication system may further include a network device.

The network device is a device that is located on a network side of the communication system and that has wireless sending and receiving functions, or a chip or a chip system that may be arranged in the device. The network device includes, but is not limited to, an access point (access point, AP) in a wireless fidelity (wireless fidelity, Wi-Fi) system such as a home gateway, a router, a server, a switch, or a bridge, an evolved NodeB (evolved NodeB, eNB), a radio network controller (radio network controller, RNC), a home base station (such as a home evolved NodeB or a home NodeB, HNB), a radio relay node, a radio backhaul node, or a transmission point (transmission and reception point, TRP, or transmission point, TP), or may be a gNB or a transmission point (TRP or TP) in 5G, for example, an NR system, or one antenna panel or a group of (including a plurality of antenna panels) antenna panels of a base station in a 5G system, or may be a network node forming a gNB or a transmission point, for example, a baseband unit (BBU), a distributed unit (distributed unit, DU), a road side unit (road side unit, RSU) having a base station function or the like. The network device may alternatively be a radio controller in a cloud radio access network (cloud radio access network, CRAN) scenario, or a network device in a future evolved public land mobile network (public land mobile network, PLMN), or a wearable device or an in-vehicle device, and further include a device that functions as a base station in device-to-device (device-to-device, D2D), vehicle-to-everything (vehicle-to-everything, V2X), machine-to-machine (machine, M2M) communication, or Internet of Things (Internet of Things) communication.

The terminal device is a terminal that accesses the communication system and that has wireless sending and receiving functions, or a chip or a chip system that may be arranged in the terminal. The terminal device may also be referred to as user equipment (User Equipment, UE), a user apparatus, an access terminal, a subscriber unit, a subscriber station, a mobile console, a mobile station (mobile station, MS), a remote station, a remote terminal, a mobile device, a user terminal, a terminal, a terminal unit, a terminal station, a terminal apparatus, a wireless communication device, a user agent, or a user apparatus. For example, the terminal device in embodiments of this application may be a mobile phone (mobile phone), a wireless data card, a personal digital assistant (personal digital assistant, PDA) computer, a laptop computer (laptop computer), a tablet computer (Pad), a computer with wireless sending and receiving functions, a machine-type communication (machine-type communication, MTC) terminal, a virtual reality (virtual reality, VR) terminal device, an augmented reality (augmented reality, AR) terminal device, an Internet of Things (Internet of Things, IoT) terminal device, a wireless terminal in industrial control (industrial control), a wireless terminal in unmanned driving (self-driving), a wireless terminal in remote medical (remote medical), a wireless terminal in a smart grid (smart grid), a wireless terminal in transportation safety (transportation safety), a wireless terminal in a smart city (smart city), a wireless terminal (such as a game console, a smart television, a smart speaker, a smart refrigerator, and a fitness apparatus) in a smart home (smart home), an in-vehicle terminal, or an RSU having a terminal function. The access terminal may be a cellular phone (cellular phone), a cordless phone, a Session Initiation Protocol (session initiation protocol, SIP) phone, a wireless local loop (wireless local loop, WLL) station, a personal digital assistant (personal digital assistant, PDA), a handheld device (handset) with a wireless communication function, a computing device, another processing device connected to a wireless modem, a wearable device, or the like. For another example, the terminal device in embodiments of this application may be an express delivery terminal (for example, a device that can monitor a location of a vehicle carrying goods or a device that can monitor a temperature and humidity of goods) in smart logistics, a wireless terminal (for example, a wearable device that can collect related data of livestock and poultry) in smart agriculture, a wireless terminal (for example, a smart elevator, a fire monitoring device, and a smart meter) in a smart building, a wireless terminal (for example, a wearable device that can monitor a physiological status of a person or an animal) in smart medical, a wireless terminal (such as a smart bus, a smart vehicle, a shared bicycle, a charging pile monitoring device, a smart traffic light, smart monitoring devices, and smart parking devices) in intelligent transportation, or a wireless terminal (such as a vending machine, a self-service checkout machine, and an unmanned convenience store) in smart retail. For another example, the terminal device in this application may be an in-vehicle module, an in-vehicle module, an in-vehicle component, an in-vehicle chip, or an in-vehicle unit that is built in a vehicle as one or more components or units. The vehicle may implement, through the in-vehicle module, the in-vehicle module, the in-vehicle component, the in-vehicle chip, or the in-vehicle unit, the distributed learning method provided in this application.

It should be noted that the distributed learning method provided in embodiments of this application may be applied to between any two nodes shown in FIG. 1, for example, between terminal devices and between a terminal device and a network device. For specific implementation, refer to the following method embodiments. Details are not described herein again.

It should be noted that the solutions in embodiments of this application may be further applied to another communication system, and a corresponding name may also be replaced with a name of a corresponding function in the another communication system.

It should be understood that FIG. 1 is merely a simplified schematic diagram of an example for ease of understanding. The communication system may further include another device that is not shown in FIG. 1.

In addition, a person of ordinary skill in the art may learn that, with evolution of a network architecture and emergence of a new service scenario, the technical solutions provided in embodiments of this application are also applicable to a similar technical problem.

To make embodiments of this application clearer, the following describes some content and concepts related to embodiments of this application together.

1. Neural network

A neural network is an algorithm network that can perform learning, summarization, and conclusion, and may be built in a computing node in a form of neural network software or hardware, for example, a training program or an executable script of a neural network. Generally, a deep neural network (deep neural networks, DNN) model is used as an example. A DNN model includes a plurality of layers of neurons (operators). Each layer has a plurality of inputs and a plurality of outputs. The input or output is a multi-dimensional array, also referred to as a tensor (tensor). Each layer has one or more weighted values, referred to as weights. An output result of a specific layer, also referred to as an eigenvalue, is equal to a result of a mathematical operation, such as multiplication, of an input and a weight of the layer, and usually relates to a matrix multiplication operation.

A fully-connected neural network is a neural network, and the fully-connected neural network is also referred to as a multi-layer perceptron (multi-layer perceptron, MLP). One MLP includes one input layer, one output layer, and a plurality of hidden layers (also referred to as intermediate layers), and each layer includes a plurality of neurons. Neurons included in two adjacent layers of neurons are connected pairwise, as shown in FIG. 2.

For two adjacent layers of neurons, an output h of a neuron at a lower layer is a weighted sum of all neurons x at an upper layer connected to the neuron at the lower layer and passes through an activation function. The matrix may be represented as the following formula: $h=f(w \times x+b)$, where w is a weight matrix, b is a bias vector, and f() is an activation function. Then, the output y of the neural network may be recursively expressed as y=$f_t$($w_t \times f_{t-1}$(...)+$b_t$), where t is a quantity of layers of neurons included in the fully-connected neural network.

2. Neural network training

A neural network may be understood as a mapping relationship between an input data set and an output data set. Generally, the neural network may be randomly initialized, and a process of obtaining the mapping relationship based on random w and random b by using existing data may be referred to as neural network training.

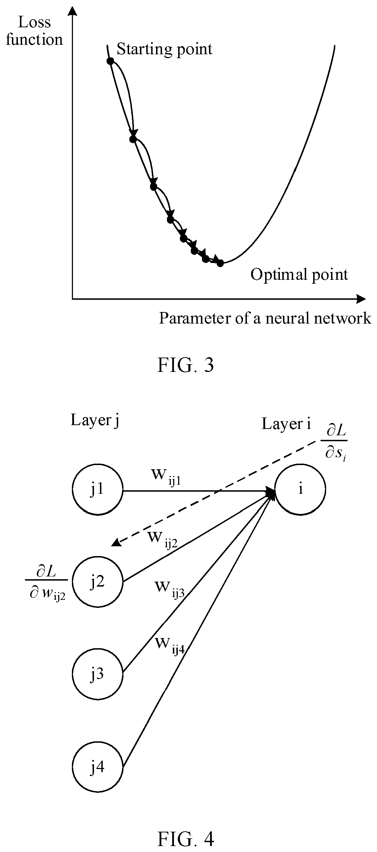

For example, a training manner includes evaluating output data of the neural network by using a loss function (loss function), to obtain and backpropagate error information. As shown in FIG. 3, a weight matrix w and a bias vector b may be iteratively optimized through the gradient descent method, and optimal w and optimal b may be obtained when a value of the loss function reaches a minimum value.

For example, a gradient descent process may be expressed as a formula (1):

$$\theta' \leftarrow \theta - \eta \times \frac{\partial L}{\partial \theta} \text{ or } \theta' = \theta - \eta \times \frac{\partial L}{\partial \theta}. \tag{1}$$

A parameter (for example, the weight w and the bias b) may be optimized by using the foregoing formula (1). In the foregoing formula (1), $\theta'$ is a value (which may also be referred to as an updated value) of a parameter before the optimization, $\theta$ is a value of the parameter before the optimization, $L$ is a loss function, $\eta$ is a learning rate and may be for controlling a stride of gradient descent, and the mathematical symbol $\leftarrow$ indicates to assign a right side to a left side.

With reference to FIG. 4, in a backpropagation process, a chain rule for obtaining a partial derivative may be used, to be specific, a gradient of a parameter of a neuron at a previous layer (layer j) may be calculated through recursion from a gradient of a parameter of a neuron (layer i) at a next layer as the following formula (2):

$$\frac{\partial L}{\partial w_{ij2}} = \frac{\partial L}{\partial s_i} \times \frac{\partial s_i}{\partial w_{ij2}}. \tag{2}$$

In the foregoing formula (2), $L$ is a loss function, $w_{ij}$ is a weight of a connection between a neuron i and a neuron j, $s_i$ is a weighted sum of inputs on the neuron i, that is, $s_i = w_{ij1} \times s_{j1} + w_{ij2} \times s_{j2} + w_{ij3} \times s_{j3} + w_{ij4} \times s_{j4}$, $\frac{\partial L}{\partial s_i}$ is a gradient $\frac{\partial L}{\partial s_i}$ transferred from a next layer (layer i) of the layer j to the layer j, and $\frac{\partial L}{\partial s_i}$ may be referred to as an intermediate layer gradient, that is, the layer i may be considered as an intermediate layer.

3. Neural network segmentation

Neural network segmentation: A neural network is segmented into a plurality of sub-neural networks at a specific intermediate layer based on computing powers and communication capabilities of nodes, and the sub-neural networks are deployed on a plurality of nodes respectively.

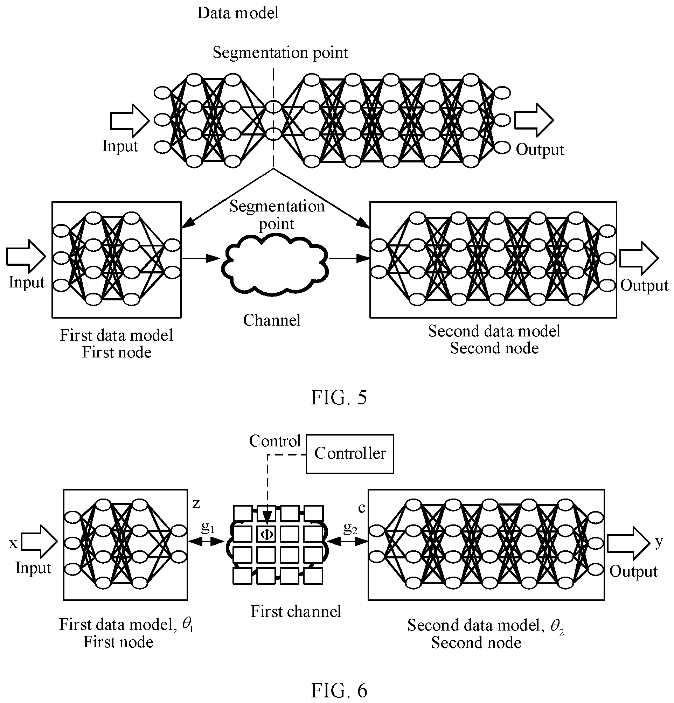

With reference to FIG. 5, a first data model and a second data model are obtained after a data model is segmented at the intermediate layer. In a forward process of training or inference, the first node processes input data by using the first data model to obtain intermediate data, and transmits the intermediate data to the second node through a channel. Then, the second node processes the intermediate data by using the second data model to obtain output data. In a reverse process of training, the second node determines error information of the second data model based on the output data, updates a parameter of the second data model, and sends the error information of the second data model to the first node. The first node determines error information of the first data model based on the error information of the second data model, and updates a parameter of the first data model.

4. Parameter of the first data model, parameter of the second data model, parameter of a first channel, and information about the first channel

Parameter of the first data model: A parameter $\theta_1$ of the first data model may be a weight and/or a bias corresponding to the first data model.

Parameter of the second data model: A parameter $\theta_2$ of the second data model may be a weight and/or a bias corresponding to the second data model.

In this embodiment of this application, the first channel may include a controllable part, and may further include an uncontrollable part. The controllable part may include a controllable environment, and the uncontrollable part may include an uncontrollable environment between two nodes. Alternatively, the first channel may include a trainable channel affected by a controllable part, and may further include a direct channel formed by an uncontrollable part.

Controllable environment: A controllable unit is deployed in an environment to adjust a radio channel environment.

For example, the controllable unit may include an active device such as a relay, a distributed antenna, or an active intelligent reflective surface. Alternatively, the controllable unit may include a passive device such as a passive intelligent reflective surface.

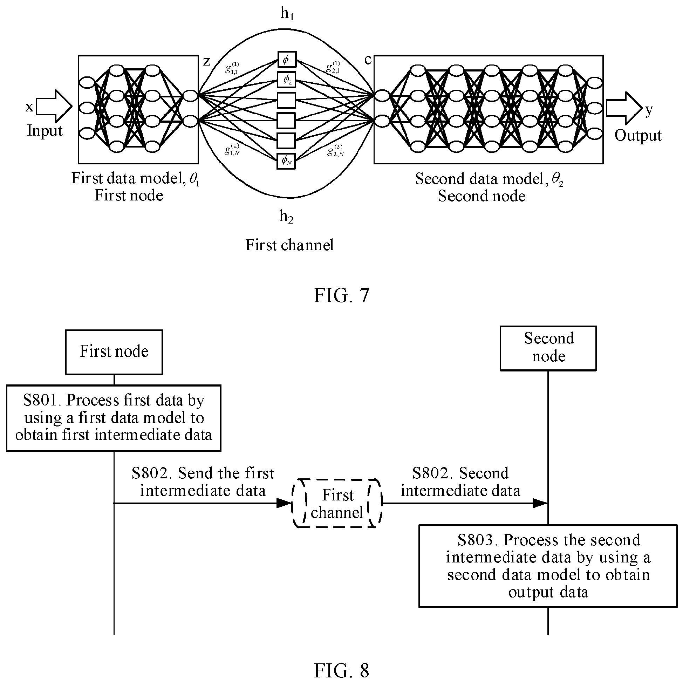

With reference to FIG. 6 or FIG. 7, the first channel may include a second channel and may further include a third channel. In embodiments of this application, the controllable part or the trainable channel affected by the controllable part is referred to as a second channel, and the uncontrollable part or the channel formed by the uncontrollable part is referred to as a third channel.

FIG. 6 is a schematic diagram of application of a distributed learning method according to an embodiment of this application. FIG. 7 is a schematic diagram of application of another distributed learning method according to an embodiment of this application. As shown in FIG. 6 or FIG. 7, the first node includes the first data model, the second node includes the second data model, and the first node communicates with the second node through the first channel. FIG. 6 mainly differs from FIG. 7 in that display forms of the first channel are different.

For example, the first channel includes the controllable part and the uncontrollable part, or the first channel includes the trainable channel affected by the controllable part and the channel formed by the uncontrollable part. With reference to FIG. 6 and FIG. 7, the first channel between the first node and the second node may be represented as $g_1 \times \Phi \times g_2 + h$ or $h + \sum_{n=1}^{N} g_{2,n} \times g_{1,n} \times \phi_n$ , where

$g_1$, $g_2$ and $h$ are related information of the uncontrollable part or related information of the channel formed by the uncontrollable part, $g_1$ is a channel from the first node to the controllable part (or referred to as the trainable channel affected by the controllable environment or the controllable part), $g_2$ is a channel from the second node to the controllable part (or referred to as the trainable channel affected by the controllable environment or the controllable part), and $h$ is a direct channel from the first node to the second node. $N$ is a dimension, for example, a quantity of controllable units, of the first channel (for example, the controllable environment or the controllable part) serving as the intermediate layer. $\Phi$ is a parameter of the controllable part or a parameter of the trainable channel affected by the controllable part, and $\Phi$ may be a response of the controllable part (or referred to as the trainable channel affected by the controllable environment or the controllable part). For example, $\Phi$ may include an amplitude, a phase effect, and the like.

For example, the $n^{\text{th}}$ element of the response $\Phi$ of the controllable part may be expressed as a formula (3):

$$\Phi_n = \beta_n \times e^{j\psi_n}, \text{where} \tag{3}$$

$\beta_n$ is an amplitude of the response, $e$ is a natural constant, $e$ is approximately equal to 2.71828, $\psi_n$ is a phase of the response, $j$ is an imaginary unit, and $j^2 = -1$.

In embodiments of this application, the parameter of the first channel may include one or more of the following: $g_1$, $g_2$, $h$, and $\Phi$. The parameter of the second channel may include $\Phi$. The information about the first channel may include information obtained based on one or more of $g_1$, $g_2$, $h$, and $\Phi$. Information about the third channel may include information obtained based on one or more of $g_1$, $g_2$, and $h$.

In the conventional technology, communication transmission is designed for lossless transmission. To ensure error-free transmission of information, in a forward process and a reverse process, channel encoding needs to be performed on information transmitted between the first node and the second node, and received information needs to be decoded.

It is found by the applicant through researches that, a characteristic of over-parameterization (that is, a quantity of parameters is greater than a quantity of training samples) of the neural network and a training method, represented by random gradient descent, of the neural network enable the neural network to have a good error tolerance capability. Therefore, in a distributed learning process, a requirement for lossless transmission of information is low. However, encoding and decoding processes occupy a large quantity of resources, resulting in a waste of resources. A design of decoupling learning of the neural network from communication causes redundancy of radio resource utilization. In addition, this solution cannot improve performance of distributed learning.

This application proposes to combine a channel with distributed learning and perform joint training on the channel and the neural network by taking the channel as a part of the neural network, so that resources can be saved, and performance of distributed learning can be improved.

The distributed learning method provided in embodiments of this application may be applied to a plurality of waveform systems such as a single carrier, a discrete Fourier transform spread orthogonal frequency division multiplexing (discrete Fourier transform spread OFDM, DFT-s-OFDM) system, a cyclic prefix orthogonal frequency division multiplexing (cyclic prefix OFDM, SC-OFDM) system, and an orthogonal time-frequency space (orthogonal time-frequency space, OTFS) system. Radio channel responses of the systems may be modeled as linear systems. A main difference between the systems is that resource definitions are different. For example, the single carrier defines a symbol in time domain, and the OTFS and like may be considered as performing further linear transformations on the symbol.

The distributed learning method provided in embodiments of this application is applicable to a scenario with one or more antennas, and mapping (that is, precoding) between a neuron and an antenna is also a linear transformation.

The distributed learning method provided in embodiments of this application is applicable to a single AI task and a multi-task or multi-view scenario. In the multi-task scenario, there may be a plurality of second data models, configured for a plurality of inference tasks. The plurality of second data models are separately updated. The first data model and the controllable environment need to be updated by integrating (for example, weighting) intermediate layer error information of the plurality of second data models. In the multi-view scenario, there may be a plurality of first data models, configured to process data of different views for subsequent inference of the second data model. The update of the controllable environment is related to transmission manners of intermediate layer inference outputs of the plurality of first data models. For example, when orthogonal/non-orthogonal multiple access is used, the plurality of first data models may be separately updated. The distributed learning method provided in embodiments of this application is described by using an example in which the distributed learning method is applied to a single AI task.

The technical solutions of this solution may be applied to a multi-hop network scenario, that is, a case in which a neural network is segmented into three or more.

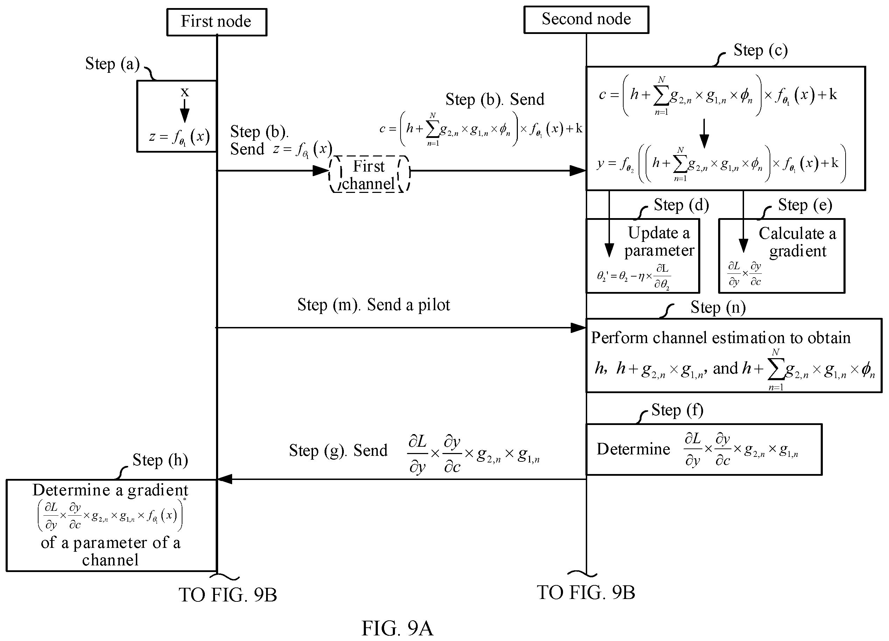

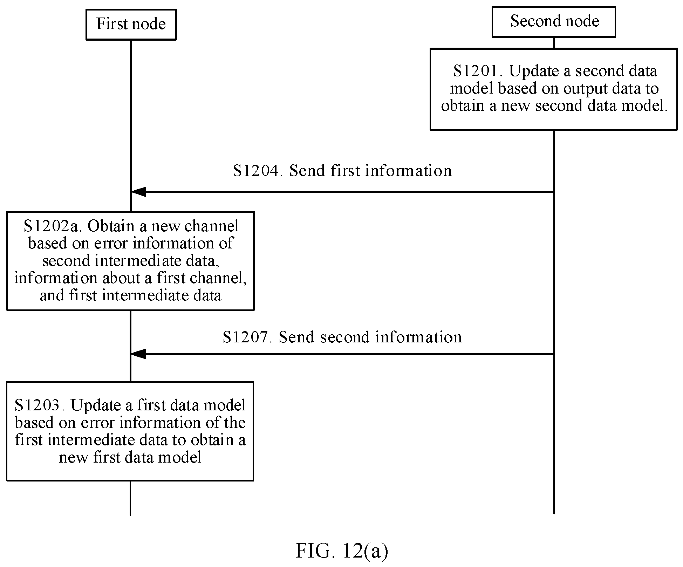

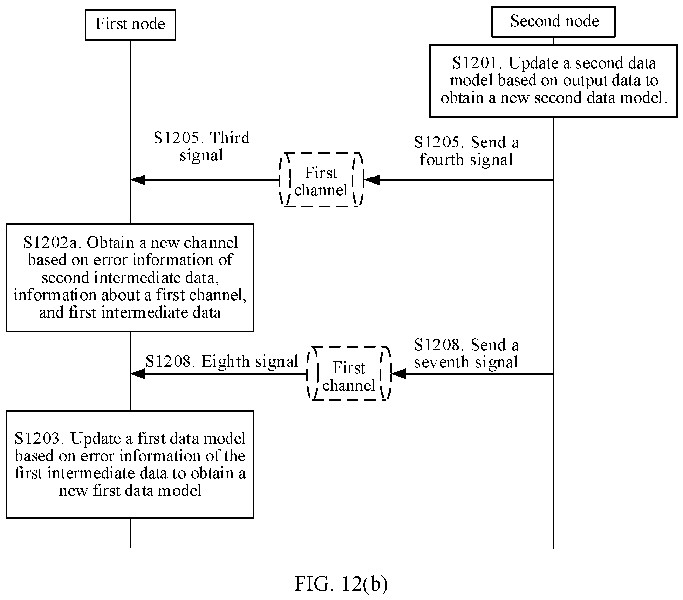

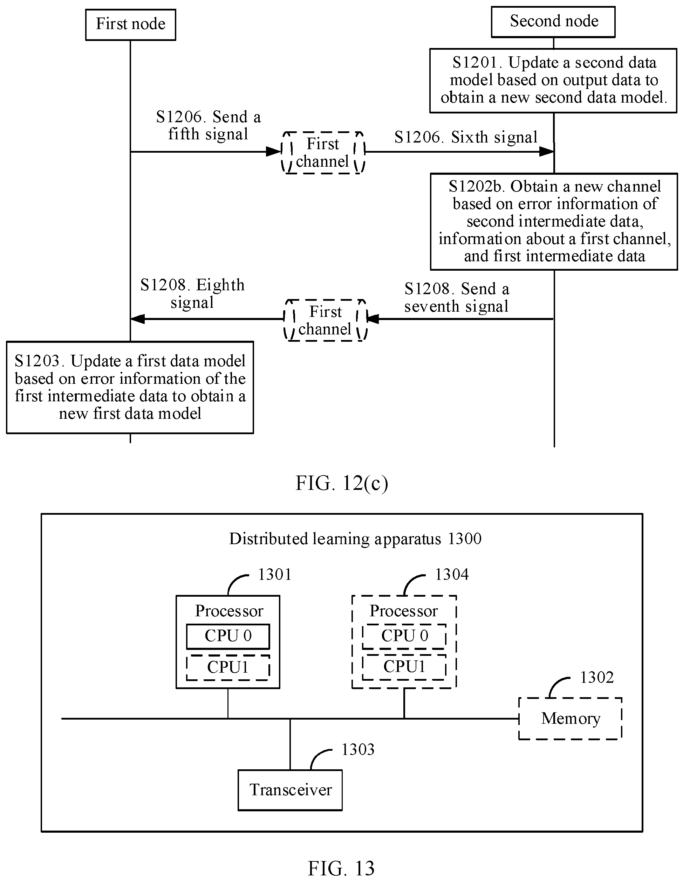

The following describes in detail the distributed learning method provided in embodiments of this application with reference to FIG. 8 to FIG. 12A and FIG. 12B. FIG. 9A to FIG. 11B are schematic diagrams of application of a distributed learning method according to an embodiment of this application. When the methods shown in FIG. 8, FIG. 12(a), FIG. 12(b), and FIG. 12(c) are described, content in FIG. 9A to FIG. 11B is described as examples.

For example, FIG. 8 is a schematic diagram of interaction of a distributed learning method according to an embodiment of this application. An OFDM system is used as an example for description. The distributed learning method may be applied to communication between any two nodes shown in FIG. 1.

As shown in FIG. 8, the distributed learning method includes the following steps.

S801. A first node processes first data by using a first data model to obtain first intermediate data.

For example, the first node includes the first data model, and the first data model is built in the first node.

For example, the first data model may be neural network software. The first data model may be built in the first node in a form of neural network software or hardware, for example, a training program or an executable script of a neural network.

Optionally, the first data may be data in a training sample or data during inference. S801 may be applied to a training process or an inference process.

With reference to FIG. 6 or FIG. 7, the first node processes first data x based on the first data model to output first intermediate data z.

With reference to step (a) in FIG. 9A to FIG. 11B, the first data is x, and the first node processes x by using the first data model whose parameter is $\theta_1$, to obtain $z = f_{\theta_1}(x)$, where $f_{\theta_1}(\ )$ is a neural network model whose parameter is $\theta_1$.

S802. The first node sends the first intermediate data to the second node through a first channel. Correspondingly, the second node receives second intermediate data from the first node through the first channel.

For example, the second intermediate data is a result of transmitting the first intermediate data to the second node through the first channel.

With reference to FIG. 6 or FIG. 7, the first node sends the first intermediate data z through the first channel, and after the first intermediate data z passes through the first channel, second intermediate data c is output, and the second node receives the second intermediate data c.

In some embodiments, the second node receives the first intermediate data (for example, $z = f_{\theta_1}(x)$) from the first node through the first channel (for example, $g_2 \times \Phi \times g_1 + h$) to obtain the second intermediate data $c = (g_2 \times \Phi \times g_1 + h) \times f_{\theta_1}(x) + k$, where k is noise. For meanings of other symbols, refer to the foregoing descriptions of the parameter of the first channel. Details are not described herein again.

With reference to step (b) in FIG. 9A to FIG. 11B, the second node receives the first intermediate data (for example, $z = f_{\theta_1}(x)$) from the first node through the first channel (for example, $h + \sum_{n=1}^{N} g_{2,n} \times g_{1,n} \times \phi_n$) to obtain the second intermediate data $c = \left(h + \sum_{n=1}^{N} g_{2,n} \times g_{1,n} \times \phi_n\right) \times f_{\theta_1}(x) + k$, where k is noise, and N is a dimension of the first channel (for example, a controllable environment of the channel, a controllable part of the channel, or a trainable channel affected by the controllable part of the channel) serving as an intermediate layer. For meanings of other symbols, refer to the foregoing descriptions of the parameter of the first channel. Details are not described herein again.

For example, the first channel is updated based on the error information of the second intermediate data, the information about the first channel, and the first intermediate data.

The error information of the second intermediate data includes a gradient of the second intermediate data or a normalized value of the gradient of the second intermediate data.

Optionally, the information about the first channel may include one or more of the following: $g_1$, $g_2$, $h$, and $\Phi$.

For a specific implementation of updating the first channel, refer to S1202a and S1202b shown in FIG. 12(a), FIG. 12(b), and FIG. 12(c). Details are not described herein again.

In this embodiment of this application, a channel (that is, the first channel) between the first node and the second node is trained, and the channel is used as an intermediate layer (for example, a residual layer) of a data model to participate in training and inference, so that a function, such as filtering or feature extraction, required by a DNN can be implemented in a wireless transmission process, which can improve performance of distributed learning. In addition, wireless transmission is enabled to directly serve for distributed learning, which can reduce processing complexity and further save resources.

Optionally, a value of the parameter of the first data model is a value obtained after previous training. A value of the parameter of the first channel is a value obtained after previous training.

That is, in a forward training process or an inference process, the value of the parameter of the first data model may be a value updated after previous training or an initial value (for example, the first data model is not trained), and the value of the parameter of the first channel may be a value updated after previous training or an initial value (for example, the first channel is not trained).

In some embodiments, in S802, that the first node sends the first intermediate data to the second node through a first channel may include: The first node modulates the first intermediate data into a symbol, and sends the symbol to the second node through the first channel.

For example, the first node may map the first intermediate data to an air interface resource and send the first intermediate data to the second node. In this way, channel encoding and decoding are not required in a data transmission process, and resources can be saved.

For example, a quantity of modulated symbols is the same as a dimension of the intermediate layer of the data model.

For example, a value of the symbol and a value of the intermediate layer may satisfy the following formula: s=z or s=W×z, that is, a specific linear transformation is satisfied between the value of the symbol and the value of the intermediate layer, where s is the value of the symbol, z is the value of the intermediate layer, and W is a linear transformation matrix. This may correspond to a case in which the data model is a complex data model, that is, the neural network is a complex neural network. The following uses s=z as an example for description.

With reference to FIG. 6 or FIG. 7, if the dimension of the intermediate layer of the data model is 4, the quantity of symbols is also 4.

For another example, the quantity of modulated symbols is a half of the dimension of the intermediate layer of the data model. In other words, outputs of two neurons form a complex symbol, or a specific linear transformation can be satisfied between the value of the symbol and the value of the intermediate layer.

For example, the following formula may be satisfied between the value of the symbol and the value of the intermediate layer: $s_i = z_{i_1} + 1 \times j \times z_{i_2}$, where $s_i$ is a value of a symbol $i$, $i_1$ and $i_2$ represent the $i_1{}^{th}$ element and the $i_2{}^{th}$ element in the intermediate layer, $j$ is a constant, and $j^2 = -1$.

In some embodiments, that the second node receives second intermediate data from the first node through the first channel in S802 may include: The second node performs dimension matching on a symbol of the received second intermediate data.

In this way, the second node does not need to perform decoding in a process of receiving data, which can save resources.

Optionally, the second node may perform dimension matching depending on whether the data model is a complex data model.

For example, a quantity of demodulated symbols is the same as a dimension of the intermediate layer of the data model. This corresponds to a case in which the data model is a complex data model.

For another example, one complex symbol of the second intermediate data is expanded into two real numbers. This corresponds to a case in which the data model is a real data model.

It should be noted that a specific implementation in which the second node performs dimension matching depending on whether the data model is a complex data model is similar to a corresponding implementation in which the first node modulates the first intermediate data into a symbol and sends the symbol to the second node through the first channel, and details are not described herein again.

It should be noted that the second node performs dimension matching on a symbol of the received second intermediate data may be performed before a second data model of the second node processes the second intermediate data, for example, performed before S803.

S803. The second node processes the second intermediate data by using the second data model to obtain output data.

For example, the second node includes the second data model. Similar to the first data model, the second data model may be built in the second node.

For example, the second data model may be neural network software and built in the second node in a form of neural network software or hardware, for example, a training program or an executable script of a neural network.

In some embodiments, the second node processes the second intermediate data $c = (g_2 \times \Phi \times g_1 + h) \times f_{\theta_1}(x) + k$ by using the second data model whose parameter is $\theta_2$ to obtain the output data $y = f_{\theta_2}((g_2 \times \Phi \times g_1 + h) \times f_{\theta_1}(x) + k)$, where $f_{\theta_2}()$ is a neural network model whose parameter is $\theta_2$, and k is noise. For meanings of other symbols, refer to the foregoing descriptions of the parameter of the first channel. Details are not described herein again.

With reference to step (c) in FIG. 9A to FIG. 11B, using an antenna of the second node as an example, the second node processes the second intermediate data $c = \left(h + \sum_{n=1}^{N} g_{2,n} \times g_{1,n} \times \phi_n\right) \times f_{\theta_1}(x) + k$ by using the second data model whose parameter is $\theta_2$, and the obtained output data may be

$$y = f_{\theta_2}\left(\left(h + \sum_{n=1}^{N} g_{2,n} \times g_{1,n} \times \phi_n\right) \times f_{\theta_1}(x) + k\right)$$

, where $N$ is a dimension of the first channel (for example, a controllable environment of the channel, a controllable part of the channel, or a trainable channel affected by the controllable part of the channel) serving as an intermediate layer, where $N$ is an integer greater than 0.

In some embodiments, $M$ antennas of the second node process the second intermediate data

$$c_m = \left(h_m + \sum_{n=1}^{N} g_{2,n,m} \times g_{1,n} \times \phi_n\right) \times f_{\theta_1}(x) + k_m$$ by using the second data model whose parameter

is $\theta_2$, and the obtained output data may be $y = f_{\theta_2}(c_1, c_2, \ldots, c_m, \ldots, c_M)$, where $N$ is a dimension of the channel (for example, a controllable environment of the channel, a controllable part of the channel, or a trainable channel affected by the controllable part of the channel) serving as an intermediate layer, where $N$ is an integer greater than 0, and $M$ is a quantity of antennas included in the second node, where $m$ is an integer greater than or equal to 1.

Optionally, a value of the parameter $\theta_2$ of the second data model of the second node may be a value updated after previous training.

That is, in a forward training process or an inference process, the value of the parameter of the second data model may be a value updated after previous training or an initial value (for example, the second data model is not trained).

By using the foregoing distributed learning method, a channel is combined with a data model, the first channel for transmitting data between the first node and the second node is used as an intermediate layer of the data model, and the first channel is trained. The first channel is optimized based on the error information of the second intermediate data, the information about the first channel, and the first intermediate data, which can improve performance of distributed learning. In addition, wireless transmission is enabled to directly serve for distributed learning, to implement integration of communication and computing, which can reduce processing complexity and further save resources.

It should be noted that S801 to S803 may be a forward training process or an inference process. Optionally, in an inference process, the second node may feed back the obtained output data to the first node.

Optionally, the second node may determine a loss function based on an output result.

For example, the loss function may be expressed as the following formula: $L = error(y, y_{label})$, where $y_{label}$ is a label corresponding to first data x, $y$ is an output result, error is a loss function, and error is related to a task of a distributed DNN. For example, in correspondence with a classification task, error may be cross-entropy; and in correspondence with a regression task, error may be a mean square error.

In a possible design manner, the distributed learning method provided in embodiments of this application may further include a reverse training process, as shown in FIG. 12(a), FIG. 12(b), and FIG. 12(c), including S1201, S1202a, S1202b, and S1203 to S1207. The distributed learning method shown in FIG. 12(a), FIG. 12(b), and FIG. 12(c) may be used in combination with the distributed learning method shown in FIG. 8.

S1201. A second node update a second data model based on output data to obtain a new second data model.

In some embodiments, S1201 may include the following step 1 and step 2.

Step 1: The second node obtains an updated value of a parameter of the second data model.

Optionally, the second node may obtain the updated value of the parameter of the second data model by using error information of the parameter of the second data model. For example, the error information may include a gradient or a normalized value of the gradient.

For example, the error information of the parameter of the second data model may be determined by the second node based on the second intermediate data and a loss function.

With reference to step (d) in FIG. 9A to FIG. 11B, using an example in which the error information is a gradient, the second node may determine, based on the second intermediate data (for example,

$$c = \left(h + \sum_{n=1}^{N} g_{2,n} \times g_{1,n} \times \phi_n\right) \times f_{\boldsymbol{\theta}_1}(x) + \mathrm{k}\right)$$ and a loss function $L$, that the gradient of the parameter $\theta_2$ of the second data model is

$$\frac{\partial L}{\partial \theta_2} = \frac{\partial \mathrm{L}}{\partial y} \times \frac{\partial y}{\partial \theta_2} = \frac{\partial L}{\partial y} \times f'_{\theta_2}\left(\left(h + \sum_{n=1}^{N} g_{2,n} \times g_{1,n} \times \phi_n\right) \times f_{\boldsymbol{\theta}_1}(x) + k\right) = \frac{\partial \mathrm{L}}{\partial y} \times f'_{\theta_2}(c)$$ , and then, the updated value of the parameter $\theta_2$ is

$$\theta_2' = \theta_2 - \eta \times \frac{\partial \mathrm{L}}{\partial \theta_2} = \theta_2 - \eta \times \frac{\partial \mathrm{L}}{\partial y} \times \frac{\partial y}{\partial \theta_2} = \theta_2 - \eta \times \frac{\partial \mathrm{L}}{\partial y} \times f'_{\theta_2}(c)$$ , where

$L$ is a loss function, $y$ is output data, $\eta$ is a learning rate, $\theta_2'$ is the updated value of the parameter $\theta_2$, and $\theta_2$ is a current value of the parameter of the second data model. For example, $\theta_2$ may be a value obtained after previous training.

Step 2: The second node updates the second data model based on the updated value of the parameter of the second data model.

For example, the second node may update the second data model by using $\theta_2'$. For example, the value of the parameter of the second data model is set to $\theta_2 - \eta \times \frac{\partial \mathcal{L}}{\partial y} \times \frac{\partial y}{\partial \theta_2}$ .

S1202a and S1202b are steps of updating the first channel. Optionally, the first channel may be updated by the first node (S1202a) or the second node (S1202b).

S1202a. The first node obtains a new first channel based on error information of the second intermediate data, information about the first channel, and first intermediate data.

Optionally, the first channel includes a second channel and a third channel. S1202a may include: The first node may update the second channel based on the error information of the second intermediate data, information about the third channel, and the first intermediate data.

S1202b. The second node obtains a new first channel based on error information of second intermediate data, information about the first channel, and first intermediate data

Optionally, the first channel includes a second channel and a third channel. S1202b may include: The second node may update the second channel based on the error information of the second intermediate data, information about the third channel, and the first intermediate data.

Optionally, the first channel may be updated by the first node or the second node.

For a specific implementation of the information about the first channel, refer to the foregoing description of the information about the first channel with reference to FIG. 6 and FIG. 7. Details are not described herein again.

In a possible design manner, the distributed learning method provided in this embodiment of this application may further include: The second node sends the error information of the second intermediate data and the information about the third channel to the first node. Correspondingly, the first node obtains the error information of the second intermediate data and the information about the third channel to the first node.

In some embodiments, that the second node sends the error information of the second intermediate data and the information about the third channel to the first node may include S1204 shown in (a) in FIG. 12: The second node sends first information to the first node. Correspondingly, that the first node obtains the error information of the second intermediate data and the information about the third channel to the first node may include: The first node receives the first information sent by the second node.

Optionally, the first information may be determined by the second node based on the error information of the second intermediate data and the information about the third channel.

For example, with reference to step (e) in FIG. 9A to FIG. 11B, the second node determines, based on the output data y, a loss function, and the second intermediate data c, that the error information of the second intermediate data is $\frac{\partial \mathcal{L}}{\partial y} \times \frac{\partial y}{\partial c}$ .

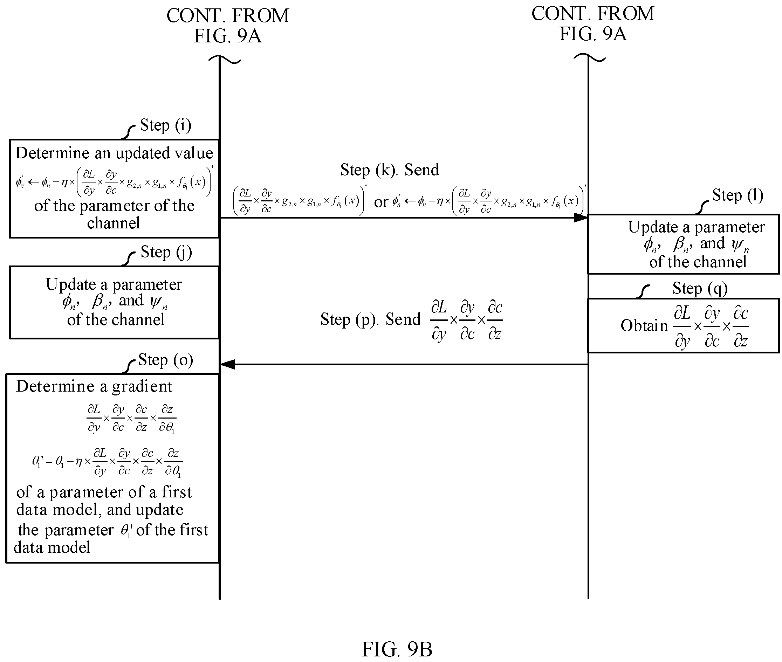

For example, with reference to step (f) in FIG. 9A and FIG. 9B, it is assumed that the error information of the second intermediate data is $\frac{\partial \mathcal{L}}{\partial y} \times \frac{\partial y}{\partial c}$, the information about the third channel is $g_{2,n} \times g_{1,n}$, and the first information determined by the second node based on the error information of the second intermediate data and the information about the third channel is $\frac{\partial \mathcal{L}}{\partial y} \times \frac{\partial y}{\partial c} \times g_{2,n} \times g_{1,n}$. Referring to step (g) in FIG. FIG. 9A and FIG. 9B, the second node sends the first information $\frac{\partial \mathcal{L}}{\partial y} \times \frac{\partial y}{\partial c} \times g_{2,n} \times g_{1,n}$ to the first node.

Optionally, the first node may receive, through a fourth channel, the first information sent by the second node. Correspondingly, the second node may send the first information to the first node through the fourth channel.

For example, the fourth channel may be a channel between the first node and the second node in a reverse training process. For example, the fourth channel may be a control channel.

That is, a channel between the first node and the second node in a reverse training process may be different from a channel between the first node and the second node in a forward training process, for example, in terms of frequency points or transmission mechanisms.

Optionally, the channel between the first node and the second node in the reverse training process may be the same as the channel between the first node and the second node in the forward training process.

For example, the first information may be transmitted on a conventional data/control channel, or may be transmitted on another physical/logical channel dedicated to DNN training. A transmission process may include operations of reducing a data amount such as sparseness, quantization, and/or entropy coding, or may include operations of reducing a transmission error such as channel coding.

Optionally, the second node may separately send the error information of the second intermediate data and the information about the third channel to the first node. For example, the second node sends the error information of the second intermediate data to the first node, and the second node sends the information about the third channel to the first node. A sequence is not limited. Correspondingly, the first node receives the error information of the second intermediate data from the second node, and the first node receives the information of the third channel from the second node.

In this embodiment of this application, when the channel between the first node and the second node in the reverse training process is different from the channel between the first node and the second node in the forward training process, the channel between the first node and the second node in the forward training process is referred to as the first channel, and the channel between the first node and the second node in the reverse training process is referred to as the fourth channel. When the channel between the first node and the second node in the reverse training process is the same as the channel between the first node and the second node in the forward training process, the channel between the first node and the second node in both the forward process and the reverse process is referred to as the first channel.

In some other embodiments, that the second node sends the error information of the second intermediate data and the information about the third channel to the first node may include S1205 shown in FIG. 12(b): The second node sends a fourth signal to the first node through the first channel.

Correspondingly, in S1205, the first node receives a third signal from the second node through the first channel.

Optionally, the fourth signal includes a signal generated by mapping the error information of the second intermediate data to an air interface resource.

For example, the second node sends the fourth signal including the error information $\frac{\partial \mathcal{L}}{\partial y} \times \frac{\partial y}{\partial c}$ of the second intermediate data, and sets a parameter $\phi$ of the controllable part.

For example, the second node may repeatedly send the fourth signal, and adjust the parameter $\phi$ of the controllable part each time the fourth signal is sent.

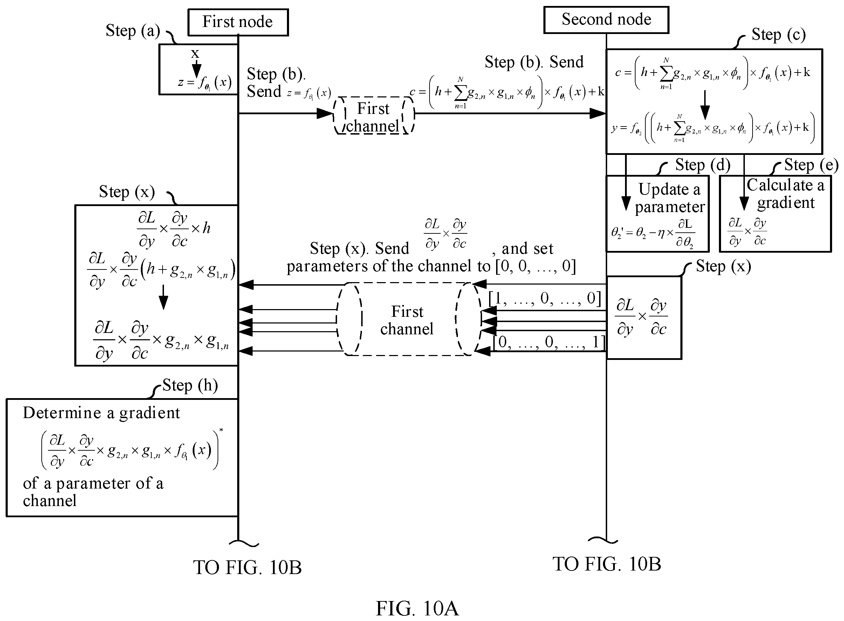

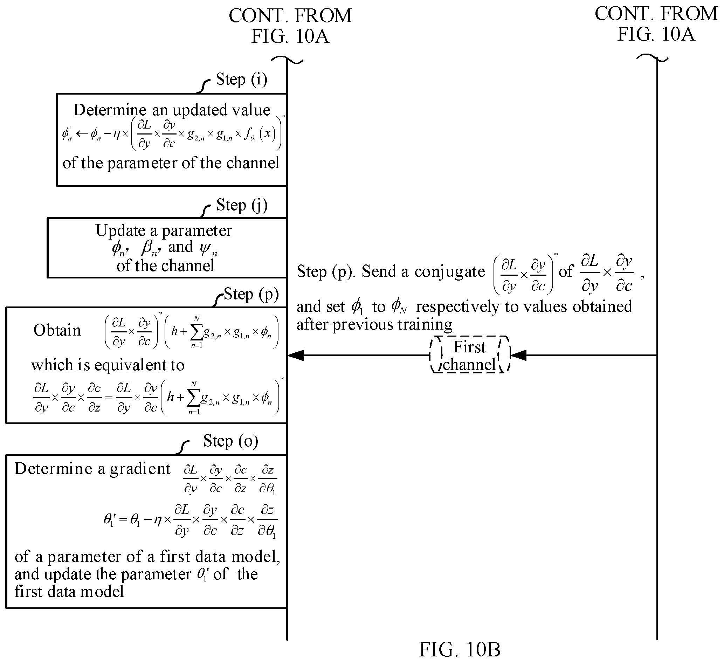

For example, with reference to step (x) in FIG. 10A and FIG. 10B, when sending the fourth signal including $\frac{\partial \mathcal{L}}{\partial y} \times \frac{\partial y}{\partial c}$ for the first time, the second node sets $\phi_1$ to $\phi_N$ to $[0, 0, \ldots, 0]$ respectively. Then, when the fourth signal is sent for the second time to the $(N+1)^{th}$ time, values of $\phi_1$ to $\phi_N$ are sequentially adjusted. For example, $\phi_1$ to $\phi_N$ are set to

$$[0, \ldots, \underset{n}{\underbrace{1}}, \ldots, 0]$$

respectively, that is, one parameter in $\phi_1$ to $\phi_N$ is set to 1, and others are set to 0. For example, when the fourth signal is sent for the second time, $\phi_1$ to $\phi_N$ are set to $[\underset{1}{\underbrace{1}}, \ldots, 0, \ldots, 0]$ respectively, that is, $\phi_1 = 1$ is set, and $\phi_2$ to $\phi_N$ are all set to 0. Similarly, when the fourth signal is sent for the $(N+1)^{th}$ time, $\phi_1$ to $\phi_N$ are set to $[0, \ldots, 0, \ldots, \underset{N}{\underbrace{1}}]$ respectively.

It should be noted that a sequence of adjusting the parameter $\phi$ of the controllable part is not limited in this embodiment of this application, where the foregoing is merely an example drafted in this application for ease of description, provided that the first node can obtain the error information of the first intermediate data based on the third signal.

Correspondingly, in some other embodiments, that the first node obtains the error information of the second intermediate data and the information about the third channel may include: The first node receives a third signal from the second node through the first channel, and the first node obtains the first information based on the third signal.

Optionally, the third signal is a signal obtained after the fourth signal is transmitted to the first node through the first channel.

For example, with reference to step (x) in FIG. 10A and FIG. 10B, the third signal received by the first node may include $\frac{\partial L}{\partial y} \times \frac{\partial y}{\partial c} \times h$ or $\frac{\partial L}{\partial y} \times \frac{\partial y}{\partial c} \times (h + g_{2,n \times} g_{1,n})$ .

Optionally, the first information may be determined by the first node based on the error information of the second intermediate data and the information about the third channel.

For example, with reference to step (x) in FIG. 10A and FIG. 10B, the first node may obtain the first information $\frac{\partial L}{\partial y} \times \frac{\partial y}{\partial c} \times g_{2,n} \times g_{1,n}$ based on $\frac{\partial L}{\partial y} \times \frac{\partial y}{\partial c} \times h$ and $\frac{\partial L}{\partial y} \times \frac{\partial y}{\partial c} \times (h + g_{2,n} \times g_{1,n})$ .

In this way, based on channel reciprocity, by using the propagation characteristic of a signal on an air interface resource, the first information (that is, the error information of the second intermediate data and the information about the third channel) is obtained through over-the-air computation, to avoid channel estimation, which can reduce pilot overheads.

In a possible design manner, the distributed learning method provided in this embodiment of this application may further include S1206 shown in FIG. 12(c): The first node sends a fifth signal to the second node through the first channel. Correspondingly, the second node receives a sixth signal from the first node through the first channel.

Optionally, the fifth signal includes a signal generated by mapping third intermediate data to an air interface resource, and the third intermediate data is for updating the first channel.

For example, the third intermediate data may be a result of processing the first data by the first node. The first node sends a fifth signal including the third intermediate data $f_{\theta_1}(x)$, and sets a parameter $\phi$ of the controllable part.

For example, the first node may repeatedly send the fifth signal, and adjust the parameter $\phi$ of the controllable part each time the fifth signal is sent.

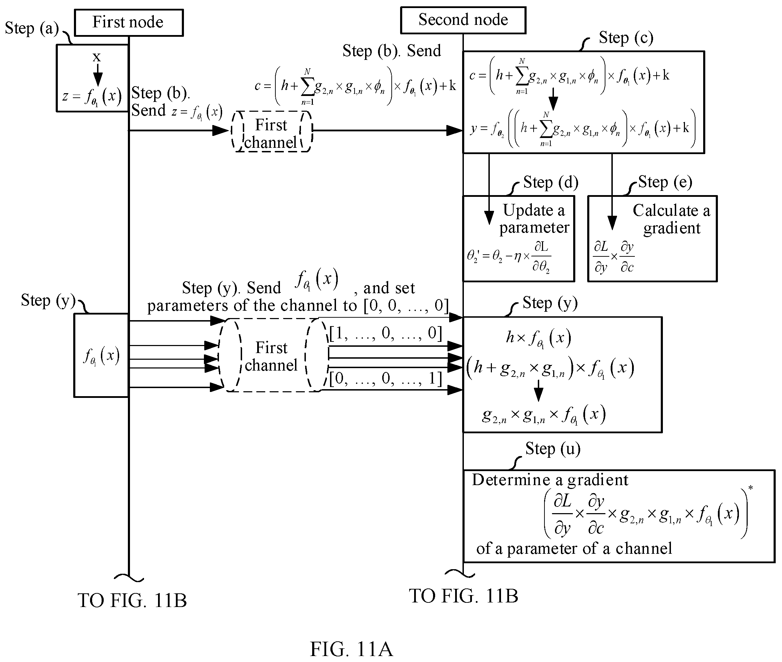

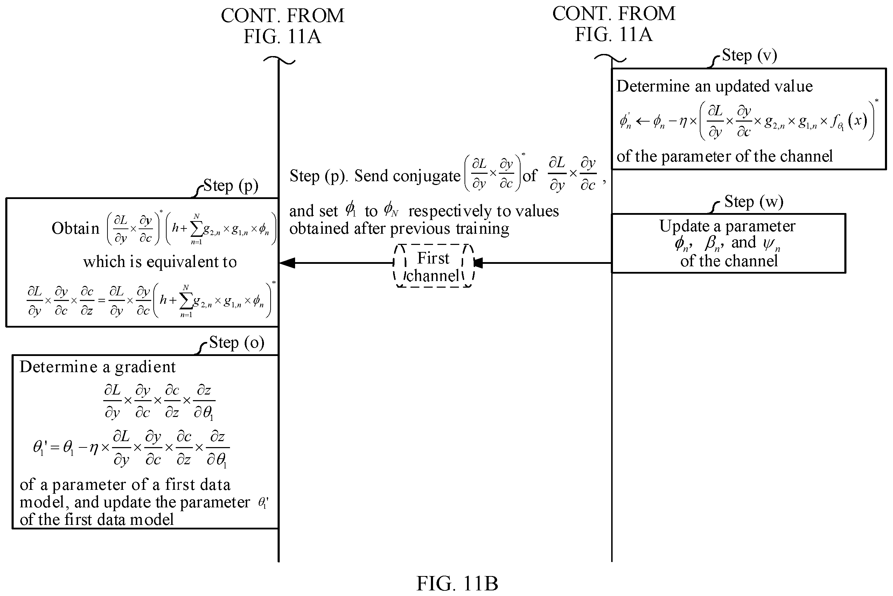

For example, with reference to step (y) in FIG. 11A and FIG. 11B, when sending the fifth signal including $f_{\theta_1}(x)$ for the first time, the first node sets $\phi_1$ to $\phi_N$ to [0, 0, ..., 0] respectively. Then, when the fourth signal is sent for the second time to the $(N+1)^{th}$ time, values of $\phi_1$ to $\phi_N$ are sequentially adjusted. For example, $\phi_1$ to $\phi_N$ are set to [0, ..., 1, ..., 0] respectively, that is, one parameter in $\phi_1$ to $\phi_N$ is set to 1, and others are set to 0. For example, when the fourth signal is sent for the second

time, $\phi_1$ to $\phi_N$ are set to $[\underset{1}{\underbrace{1}}, ..., 0, ..., 0]$ respectively, that is, $\phi_1 = 1$ is set, and $\phi_2$ to $\phi_N$ are all set to 0. Similarly, when the fourth signal is sent for the $(N+1)^{th}$ time, $\phi_1$ to $\phi_N$ are set to $[0, ..., 0, ..., \underset{N}{\underbrace{1}}]$ respectively.

It should be noted that a sequence of adjusting the parameter $\phi$ of the controllable part is not limited in this embodiment of this application, where the foregoing is merely an example drafted in this application for ease of description.

Optionally, the sixth signal is a signal obtained after the fifth signal is transmitted to the second node through the first channel.

Optionally, the first node may obtain third information based on the sixth signal.

For example, the third information may be determined based on the third intermediate data and the information about the third channel.

For example, with reference to step (y) in FIG. 11A and FIG. 11B, the sixth signal received by the second node may include $h \times f_{\theta_1}(x)$ or $(h + g_{2,n} \times g_{1,n}) \times f_{\theta_1}(x)$. The second node may obtain the third information $g_{2,n} \times g_{1,n} \times f_{\theta_1}(x)$ based on $h \times f_{\theta_1}(x)$ and $(h + g_{2,n} \times g_{1,n}) \times f_{\theta_1}(x)$.

In this way, based on channel reciprocity, by using the propagation characteristic of a signal on an air interface resource, the information about the third channel and the third intermediate data are obtained through over-the-air computation, to avoid channel estimation, which can reduce pilot overheads.

In some embodiments, the first node or the second node may obtain a new first channel based on the first information and the first intermediate data.

The following specifically describes updating the first channel (obtaining a new first channel) with reference to Example 1 to Example 4.

Example 1: A manner of updating the first channel may include the following step 1.1 to step 1.3.

Step 1.1. The first node determines error information of a parameter of the first channel based on the first information and the first intermediate data.

Optionally, the error information of the parameter of the first channel may include a gradient of the parameter of the first channel or a normalized value of the gradient of the parameter of the first channel.

For example, the parameter of the first channel may be a parameter $\phi$ of a controllable part of the first channel. For a specific implementation of the parameter $\phi$ of the controllable part, refer to the foregoing description of the parameter of the first channel. Details are not described herein again.

Optionally, the first node may determine error information of a parameter of the second channel based on the first information and the first intermediate data.

With reference to step (h) in FIG. 9A and FIG. 9B or FIG. 10A and FIG. 10B, the first node may determine, based on the first information $\frac{\partial \mathcal{L}}{\partial y} \times \frac{\partial y}{\partial c} \times g_{2,n} \times g_{1,n}$ and the first intermediate data $f_{\theta_1}(x)$, that a gradient of the parameter of the second channel is $\frac{\partial \mathcal{L}}{\partial \phi_n} = \left( \frac{\partial \mathcal{L}}{\partial y} \times \frac{\partial y}{\partial c} \times g_{2,n} \times g_{1,n} \times f_{\theta_1}(x) \right)^*$, where the symbol * is a conjugation operation.

Step 1.2. The first node determines an updated value of the parameter of the second channel based on the error information of the parameter of the second channel.

With reference to step (i) in FIG. 9A and FIG. 9B or FIG. 10A and FIG. 10B, the first node may update the parameter of the second channel by using the gradient $\left( \frac{\partial \mathcal{L}}{\partial y} \times \frac{\partial y}{\partial c} \times g_{2,n} \times g_{1,n} \times f_{\theta_1}(x) \right)^*$ of the parameter $\phi$ of the second channel. The updated value $\phi'_n$ of the parameter of the second channel may be represented by the following formula $\phi'_n = \phi_n - \eta \times \left( \frac{\partial \mathcal{L}}{\partial y} \times \frac{\partial y}{\partial c} \times g_{2,n} \times g_{1,n} \times f_{\theta_1}(x) \right)^*$, or $\phi'_n$ may be represented by the following formula $\phi'_n \leftarrow \phi_n - \eta \times \left( \frac{\partial \mathcal{L}}{\partial y} \times \frac{\partial y}{\partial c} \times g_{2,n} \times g_{1,n} \times f_{\theta_1}(x) \right)^*$, where $\phi'_n$ represents the updated value of the parameter of the second channel, and $\phi_n$ represents a current value of the parameter of the second channel. For example, $\phi_n$ may be a value obtained after previous training.

Step 1.3. The first node updates the second channel based on the updated value of the parameter of the second channel.

With reference to step (j) in FIG. 9A and FIG. 9B or FIG. 10A and FIG. 10B, the first node may update the parameter $\phi_n$, $\beta_n$, and $\psi_n$ of the second channel by using $\phi_n - \eta \left( \frac{\partial \mathcal{L}}{\partial y} \times \frac{\partial y}{\partial c} \times g_{2,n} \times g_{1,n} \times f_{\theta_1}(x) \right)^*$, to obtain a new first channel.

Optionally, the first node may be configured to adjust the parameter of the second channel.

For example, the first node has a function of adjusting the parameter of the second channel. For example, the first node includes a controller. The controller may be configured to adjust the parameter of the controllable part.

In some embodiments, after performing the foregoing step 1.1, the first node may perform the following step 2.1, to enable the second node to update the first channel.

Example 2: A manner of updating the first channel may include the foregoing step 1.1 and the following step 2.1 to step 2.3. Step 1.1 may be performed first, and then step 2.1 to step 2.3 are performed.

Step 2.1. The first node sends the error information of the parameter of the second channel to the second node. Correspondingly, the second node receives the error information of the parameter of the second channel from the first node.

For a specific implementation of the error information of the parameter of the second channel, refer to the foregoing step 1.1. Details are not described herein again.

With reference to step (k) in FIG. 9A and FIG. 9B, the first node sends $\left( \frac{\partial \mathcal{L}}{\partial y} \times \frac{\partial y}{\partial c} \times g_{2,n} \times g_{1,n} \times f_{\theta_1}(x) \right)^*$ to the second node.

Optionally, the first node sends the error information of the parameter of the second channel to the second node through the fourth channel. Correspondingly, the second node receives the error information of the parameter of the second channel from the first node through the fourth channel.

Step 2.2. The second node determines an updated value of the parameter of the second channel based on the error information of the parameter of the second channel.

It should be noted that an implementation of step 2.2 is similar to that of the foregoing step 1.2, and a main difference is that the first node is replaced with the second node, and details are not described herein again.

Step 2.3. The second node updates the second channel based on the updated value of the parameter of the second channel.

With reference to step (1) in FIG. 9A and FIG. 9B, the second node may update the parameter $\phi_n$, $\beta_n$, and $\psi_n$ of the second channel by using $\phi_n - \eta \times \left( \frac{\partial \mathcal{L}}{\partial y} \times \frac{\partial y}{\partial c} \times g_{2,n} \times g_{1,n} \times f_{\theta_1}(x) \right)^*$ , to obtain a new first channel.

For example, the second node has a function of adjusting the parameter of the second channel. For example, the second node includes a controller. The controller may be configured to adjust the parameter of the controllable part.

In this way, when the first node does not have a function of adjusting the parameter of the second channel, and the second node has a function of adjusting the parameter of the second channel, the first node may send the error information of the parameter of the second channel to the second node, to enable the second node to update the first channel.

In some embodiments, after performing the foregoing step 1.2, the first node may perform the following step 3.1 without performing step 1.3, to enable the second node to update the second channel.

Example 3: A manner of updating the second channel may include the foregoing step 1.1 and step 1.2 and the following step 3.1 and step 3.2.

Step 3.1. The first node sends the updated value of the parameter of the second channel to the second node. Correspondingly, the second node receives the updated value of the parameter of the second channel from the first node.

With reference to step (k) in FIG. 9A and FIG. 9B, the first node may send the updated value $\phi_n - \eta \times \left( \frac{\partial \mathcal{L}}{\partial y} \times \frac{\partial y}{\partial c} \times g_{2,n} \times g_{1,n} \times f_{\theta_1}(x) \right)^*$ of the parameter of the second channel to the second node.

Step 3.2. The second node updates the second channel based on the updated value of the parameter of the second channel.

It should be noted that, for an implementation of step 3.2, reference may be made to step 2.3. Details are not described herein again.

For example, the second node has a function of adjusting the parameter of the second channel. For example, the second node includes a controller. The controller may be configured to adjust the parameter of the controllable part.

In this way, when the first node does not have a function of adjusting the parameter of the second channel, and the second node has a function of adjusting the parameter of the second channel, the first node may send the updated value of the parameter of the second channel to the second node, to enable the second node to update the first channel.

Example 4: A manner of updating the first channel may include the following step 4.1 to step 4.3.

Step 4.1: The second node determines error information of a parameter of the second channel based on the error information of the second intermediate data, the information about the third channel, and the first intermediate data.

For example, the second node may update the second channel based on third information and the error information of the second intermediate data.

Optionally, the error information of the parameter of the second channel may include a gradient of the parameter of the second channel or a normalized value of the gradient of the parameter of the second channel.

For example, the parameter of the second channel may be a parameter $\phi$ of a controllable part of the first channel. For a specific implementation of the parameter $\phi$ of the controllable part, refer to the foregoing description of the parameter of the first channel. Details are not described herein again.

Optionally, the second node may determine the error information of the parameter of the second channel based on the error information of the second intermediate data, the information about the third channel, and the first intermediate data.

For example, the second node may determine the error information of the parameter of the second channel based on the third information and the error information of the second intermediate data.

With reference to step (u) in FIG. 11A and FIG. 11B, the second node determines, based on the third information $g_{2,n} \times g_{1,n} \times f_{\theta_1}(x)$ and the error information $\frac{\partial \mathcal{L}}{\partial y} \times \frac{\partial y}{\partial c}$ of the second intermediate data, that the gradient of the parameter $\phi$ of the second channel is $\left( \frac{\partial \mathcal{L}}{\partial y} \times \frac{\partial y}{\partial c} \times g_{2,n \times} g_{1,n} \times f_{\theta_1}(x) \right)^*$.

Step 4.2. The second node determines an updated value of the parameter of the second channel based on the error information of the parameter of the second channel.

With reference to step (v) in FIG. 11A and FIG. 11B, the second node may update the parameter of the second channel by using the gradient $\left(\frac{\partial \mathcal{L}}{\partial y} \times \frac{\partial y}{\partial c} \times g_{2,n} \times g_{1,n} \times f_{\theta_1}(x)\right)^*$ of the parameter $\phi$ of the second channel. The updated value $\phi'_n$ of the parameter of the second channel may be represented by the following formula

$$\phi'_n = \phi_n - \eta \times \left(\frac{\partial \mathcal{L}}{\partial y} \times \frac{\partial y}{\partial c} \times g_{2,n} \times g_{1,n} \times f_{\theta_1}(x)\right)^*$$ , or $\phi'_n$ may be represented by the following formula

$$\phi'_n \leftarrow \phi_n - \eta \times \left(\frac{\partial \mathcal{L}}{\partial y} \times \frac{\partial y}{\partial c} \times g_{2,n} \times g_{1,n} \times f_{\theta_1}(x)\right)^* .$$

Step 4.3. The second node updates the second channel based on the updated value of the parameter of the second channel.

With reference to step (w) in FIG. 11A and FIG. 11B, the second node may update the parameter $\phi_n$, $\beta_n$, and $\psi_n$ of the second channel by using $\phi_n - \eta \times \left(\frac{\partial \mathcal{L}}{\partial y} \times \frac{\partial y}{\partial c} \times g_{2,n} \times g_{1,n} \times f_{\theta_1}(x)\right)^*$ , to obtain a new first channel.

For example, the second node has a function of adjusting the parameter of the second channel. For example, the second node includes a controller. The controller may be configured to adjust the parameter of the controllable part.

It should be noted that the manners of updating the first channel recorded in Example 1 to Example 4 may be further applied to a case in which both the first node and the second node have a function of adjusting a parameter of a channel.

In a possible design manner, the distributed learning method provided in this embodiment of this application may include: The first node sends a first signal to the second node through the first channel. Correspondingly, the second node receives a second signal from the first node through the first channel.

For example, the second signal is a signal obtained after the first signal is transmitted to the second node through the first channel.

Optionally, the first signal is for determining the information about the third channel.

For example, the first signal may be a pilot signal, and the first node may send a pilot and set a parameter $\phi$ of the controllable part.

For example, with reference to step (m) in FIG. 9A and FIG. 9B, the first node sends a pilot to the second node, and the first node sets $\phi_1$ to $\phi_1$ to [0, 0, ..., 0] respectively, and sets $\phi_1$ to $\phi_N$ to [0, ..., 1, ..., 0] respectively, that is, sets one parameter in $\phi_1$ to $\phi_N$ to 1, and sets others to 0. For example, when $n$=1, $\phi_1$ to $\phi_N$ are set to $\left[\underset{1}{\underbrace{1}}, ..., 0, ..., 0\right]$ respectively, that is, $\phi_1 = 1$ is set, and $\phi_2$ to $\phi_N$ are all set to 0.

Optionally, the second node may obtain the information about the first channel based on the second signal.

In this way, the second node may perform channel estimation to obtain information about a channel, and may update the channel or the first data model, to improve performance of distributed learning.

For example, with reference to step (n) in FIG. 9A and FIG. 9B, it is assumed that the first node sets $\phi_1$ to $\phi_N$ to [0, 0, ..., 0] respectively, and sends a pilot signal to the second node. Based on an expression $h + \sum_{n=1}^{N} g_{2,n} \times g_{1,n} \times \phi_n$ of a channel, the second node may obtain information $h$ about the first channel (for example, the third channel).

The first node sets $\phi_1$ to $\phi_N$ to $\left[0, ..., \underset{n}{\underbrace{1}}, ..., 0\right]$ respectively, that is, sets one parameter in $\phi_1$ to $\phi_N$ to 1, and sets others to 0. Based on an expression $h + \sum_{n=1}^{N} g_{2,n} \times g_{1,n} \times \phi_n$ of a channel, the second node may obtain information $h + g_{2,n} \times g_{1,n}$ about the first channel (for example, the third channel). For example, when $n$=1, $\phi_1$ to $\phi_N$ are set to $\left[\underset{1}{\underbrace{1}}, ..., 0, ..., 0\right]$ respectively, that is, $\phi_1 = 1$ is set, and $\phi_2$ to $\phi_N$ are all set to 0, so that the information $h + g_{2,1} \times g_{1,1}$

about the first channel (for example, the third channel) can be obtained.

Based on the obtained information $h$ about the first channel (for example, the third channel) and the obtained information $h + g_{2,n} \times g_{1,n}$ about the first channel (for example, the third channel), the second node may obtain information $g_{2,n} \times g_{1,n}$ about the first channel (for example, the third channel).

For example, in step (j) in FIG. 9A and FIG. 9B and FIG. 7, the first node sets $\phi_1$ to $\phi_N$ respectively to values obtained after previous training, and the second node may obtain information $h + \sum_{n=1}^{N} g_{2,n} \times g_{1,n} \times \phi_n$ about the first channel.

It should be noted that the value of $N$ may be equal to an actual quantity of controllable units, for example, a quantity of distributed antennas or a quantity of elements of an intelligent reflective surface. Alternatively, the value of $N$ may be less than an actual quantity of controllable units. For example, for a super-large-scale antenna array or intelligent reflective surface array, a plurality of controllable units may be controlled as a group, to reduce overheads.

It should be noted that a sequence of step (m) to step (n) and that the second node sends the first information to the first node is not limited in this embodiment of this application. For example, step (m) to step (n) may be performed before the second node sends the first information to the first node. That is, after obtaining the information about the first channel (for example, the third channel) through estimation, the second node may send the first information to the first node, to update the first channel.

S1203. The first node updates the first data model based on the error information of the first intermediate data to obtain a new first data model.

In some embodiments, S1203 may include the following step 3 to step 5.

Step 3: The first node obtains the error information of the parameter of the first data model based on the error information of the first intermediate data.

With reference to step (o) in FIG. 9A to FIG. 11B, the first node may obtain a gradient $\frac{\partial \mathcal{L}}{\partial \theta_1} = \frac{\partial \mathcal{L}}{\partial y} \times \frac{\partial y}{\partial c} \times \left( h + \sum_{n=1}^{N} g_{2,n} \times g_{1,n} \times \phi_n \right)^* \times \frac{\partial f_{\theta_1}}{\partial \theta_1} = \frac{\partial \mathcal{L}}{\partial y} \times \frac{\partial y}{\partial c} \times \frac{\partial c}{\partial z} \times \frac{\partial z}{\partial \theta_1}$ of the parameter $\theta_1$ of the first data model based on the error information $\frac{\partial \mathcal{L}}{\partial y} \times \frac{\partial y}{\partial c} \times \frac{\partial c}{\partial z}$ of the first intermediate data.

Step 4: The first node obtains an updated value of the parameter of the first data model based on the error information of the parameter of the first data model.

With reference to step (o) in FIG. 9A to FIG. 11B, the first node may obtain the updated value $\theta_1' = \theta_1 - \eta \times \frac{\partial \mathcal{L}}{\partial y} \times \frac{\partial y}{\partial c} \times \frac{\partial c}{\partial z} \times \frac{\partial z}{\partial \theta_1}$ of the parameter $\theta_1$ of the first data model based on the error information $\frac{\partial \mathcal{L}}{\partial y} \times \frac{\partial y}{\partial c} \times \frac{\partial c}{\partial z} \times \frac{\partial z}{\partial \theta_1}$ of the parameter of the first data model.

Step 5: The first node updates the first data model based on the updated value of the parameter of the first data model.

With reference to step (o) in FIG. 9A to FIG. 11B, the first node may update the first data model by using $\theta_1'$. For example, the value of the parameter of the first data model is set to $\theta_1 - \eta \frac{\partial \mathcal{L}}{\partial y} \times \frac{\partial y}{\partial c} \times \frac{\partial c}{\partial z} \times \frac{\partial z}{\partial \theta_1}$.

In a possible design manner, the distributed learning method provided in this embodiment of this application may further include S1207 shown in (a) in FIG. 12: The second node sends second information to the first node. Correspondingly, the first node receives the second information sent by the second node.

Optionally, the second information may be for obtaining the error information of the first intermediate data.

In some embodiments, the second information may include the error information of the first intermediate data. For example, the second information may include the error information $\frac{\partial L}{\partial y} \times \frac{\partial y}{\partial c} \times \frac{\partial c}{\partial z}$ of the first intermediate data.

For example, with reference to step (p) in FIG. 9A and FIG. 9B, the second node sends the error information $\frac{\partial L}{\partial y} \times \frac{\partial y}{\partial c} \times \frac{\partial c}{\partial z}$ of the first intermediate data to the first node.

Optionally, the second node may send the second information to the first node through the fourth channel. Correspondingly, the first node receives, through the fourth channel, the second information sent by the second node. In other words, the second node may send the second information to the first node through the control channel.

In some embodiments, before the second node sends the second information to the first node, the distributed learning method provided in this embodiment of this application may further include: The second node obtains the error information of the first intermediate data based on the error information of the second intermediate data and the information about the first channel.

For example, with reference to step (q) in FIG. 9A and FIG. 9B, the second node determines, based on the error information $\frac{\partial \mathcal{L}}{\partial y} \times \frac{\partial y}{\partial c}$ of the second intermediate data and the information $h + \sum_{n=1}^{N} g_{2,n} \times g_{1,n} \times \phi_n$ about the first channel, that the error information of the first intermediate data is $\frac{\partial \mathcal{L}}{\partial y} \times \frac{\partial y}{\partial c} \times \frac{\partial c}{\partial z}$, where $\frac{\partial c}{\partial z}$ is a function of the first channel, and for a linear complex channel $\frac{\partial c}{\partial z} = \left( h + \sum_{n=1}^{N} g_{2,n} \times g_{1,n} \times \phi_n \right)^*$, the symbol * is a conjugation operation.

That is, after obtaining the error information of the first intermediate data, the second node may send the second information including the error information of the first intermediate data to the first node, so that the first node may update the first data model, which improves performance of distributed learning.

In some other embodiments, the second information may include the error information of the second intermediate data and the information about the first channel, and the error information of the second intermediate data and the information about the first channel are for determining the error information of the first intermediate data.

That is, the second node may send the error information of the second intermediate data and the information about the first channel to the first node. Correspondingly, the first node receives the error information of the second intermediate data and the information about the first channel that are sent by the second node.

In a possible design manner, the distributed learning method provided in this embodiment of this application may further include: S1207 shown in FIG. 12(b) or FIG. 12(c): The second node sends a seventh signal to the first node. Correspondingly, the first node receives an eighth signal from the second node, and obtains the error information of the first intermediate data based on the eighth signal.

Optionally, the eighth signal is a signal obtained after a seventh signal is transmitted to the first node through the first channel, and the seventh signal includes a signal generated by mapping the error information of the second intermediate data to an air interface resource.

For example, the second node may send the error information of the second intermediate data, and set a parameter of the controllable part.

For example, the second node may form, based on dimension matching, the error information $\frac{\partial \mathcal{L}}{\partial y} \times \frac{\partial y}{\partial c}$ of the second intermediate data into a modulated symbol, modulate the modulated symbol into a waveform for sending, and adjust a parameter $\phi$ of the controllable part, so that the first node receives different over-the-air computation results.

For example, with reference to step (p) in FIG. 10A to FIG. 11B, the second node sends a conjugate $\left( \frac{\partial \mathcal{L}}{\partial y} \times \frac{\partial y}{\partial c} \right)^*$ of the error information $\frac{\partial \mathcal{L}}{\partial y} \times \frac{\partial y}{\partial c}$ of the second intermediate data, and sets $\phi_1$ to $\phi_N$ respectively to values obtained after previous training, so that the first node may obtain the second information $\left( \frac{\partial \mathcal{L}}{\partial y} \times \frac{\partial y}{\partial c} \right)^* \left( h + \sum_{n=1}^{N} g_{2,n} \times g_{1,n \times} \phi_n \right)$. The error information of the first intermediate data obtained by the first node meets the following formula $\left( \frac{\partial \mathcal{L}}{\partial y} \times \frac{\partial y}{\partial c} \times \frac{\partial c}{\partial z} \right)^* = \left( \frac{\partial \mathcal{L}}{\partial y} \times \frac{\partial y}{\partial c} \right)^* \left( h + \sum_{n=1}^{N} g_{2,n} \times g_{1,n} \times \phi_n \right)$, which is equivalent to $\frac{\partial \mathcal{L}}{\partial y} \times \frac{\partial y}{\partial c} \times \frac{\partial c}{\partial z} = \frac{\partial \mathcal{L}}{\partial y} \times \frac{\partial y}{\partial c} \left( h + \sum_{n=1}^{N} g_{2,n} \times g_{1,n \times} \phi_n \right)^*$.

In this way, over-the-air computation of the gradient of the intermediate layer of the neural network of the first node is implemented through a process of propagation of a signal in the air, which can reduce pilot overheads.

Optionally, the distributed learning method provided in this embodiment of this application may further include performing processing, such as normalization, amplitude limiting, sparseness, and/or power control, on the error information of the parameter of the first data model, the error information of the parameter of the channel, and the error information of the parameter of the second data model, to reduce a peak-to-average ratio of a transmit waveform, improve a signal-to-noise ratio, and so on.

It should be noted that a sequence of S1201 to S1208 is not limited in this embodiment of this application provided that reverse training can be implemented.

By using the foregoing distributed learning method, a channel between the first node and the second node is trained, the channel is used as an intermediate layer (for example, a residual layer) of a data model, and the first data model, the channel, and the second data model are trained and enabled to participate in inference, which can performance of distributed learning. In addition, wireless transmission is enabled to directly serve for distributed learning, which can reduce processing complexity and further save resources.

The distributed learning method provided in embodiments of this application is described in detail above with reference to FIG. 8 to FIG. 12(c). A distributed learning apparatus provided in embodiments of this application is described below in detail with reference to FIG. 13 to FIG. 14.

FIG. 13 is a schematic diagram of a structure of a distributed learning apparatus configured to perform a distributed learning method according to an embodiment of this application. A distributed learning apparatus 1300 may be a first node or a second node, or may be a chip or another component having a corresponding function used in the first node or the second node. As shown in FIG. 13, the distributed learning apparatus 1300 may include a processor 1301 and a transceiver 1303, and may further include a memory 1302. The processor 1301 is coupled to the memory 1302 and the transceiver 1303. For example, the processor 1301 may be connected to the memory 1302 and the transceiver 1303 by a communication bus. Alternatively, the processor 1301 may be used independently.

The following describes in detail components of the distributed learning apparatus 1300 with reference to FIG. 13.

The processor 1301 is a control center of the distributed learning apparatus 1300, and may be one processor, or may be a general term of a plurality of processing elements.

The processor 1301 may perform various functions of the distributed learning apparatus 1300 by running or executing a software program stored in the memory 1302 and invoking data stored in the memory 1302.

In a specific implementation, in an embodiment, the processor 1301 may include one or more CPUs, for example, a CPU 0 and a CPU 1 shown in FIG. 13.

In a specific implementation, in an embodiment, the distributed learning apparatus 1300 may include a plurality of processors, for example, a processor 1301 and a processor 1304 shown in FIG. 13. Each of the processors may be a single-core processor (single-CPU) or may be a multi-core processor (multi-CPU). The processor herein may be one or more communication devices, circuits, and/or processing cores configured to process data (for example, computer program instructions).

The memory 1302 may be integrated with the processor 1301, or may exist independently, and is coupled to the processor 1301 through an input/output port (not shown in FIG. 13) of the distributed learning apparatus 1300. This is not specifically limited in this embodiment of this application.

For example, the input port may be configured to implement receiving functions performed by the first node or the second node in any one of the foregoing method embodiments, and the output port may be configured to implement sending functions performed by the first node or the second node in any one of the foregoing method embodiments.

The memory 1302 is configured to store a software program for executing the solutions of this application, and the processor 1301 controls execution. For a specific implementation, refer to the foregoing method embodiments. Details are not described herein again.

The transceiver 1303 is configured to communicate with another apparatus. For example, when the distributed learning apparatus 1300 is the first node, the transceiver 1303 may be configured to communicate with the second node. For another example, when the distributed learning apparatus 1300 is the second node, the transceiver 1303 may be configured to communicate with the first node. In addition, the transceiver 1303 may include a receiver and a transmitter (not separately shown in FIG. 13). The receiver is configured to implement a receiving function, and the transmitter is configured to implement a sending function. The transceiver 1303 may be integrated with the processor 1301, or may exist independently, and is coupled to the processor 1301 through an input/output port (not shown in FIG. 13) of the distributed learning apparatus 1300. This is not specifically limited in this embodiment of this application.

It should be noted that a structure of the distributed learning apparatus 1300 shown in FIG. 13 does not constitute a limitation on the distributed learning apparatus. An actual distributed learning apparatus may include more or fewer components than those shown in the figure, or some components may be combined, or a different component arrangement may be used.

Actions of the first node in the foregoing steps S801, S802, S1202a, S1203, and S1206 may be performed by the processor 1301 in the distributed learning apparatus 1300 shown in FIG. 13 by invoking application program code stored in the memory 1302, to indicate the first node to perform the actions.

Actions of the second node in the foregoing steps S803, S1201, S1202b, S1204, S1205, S1207, and S1208 may be performed by the processor 1301 in the distributed learning apparatus 1300 shown in FIG. 13 by invoking application program code stored in the memory 1302, to indicate the second node to perform the actions. This is not limited in this embodiment.

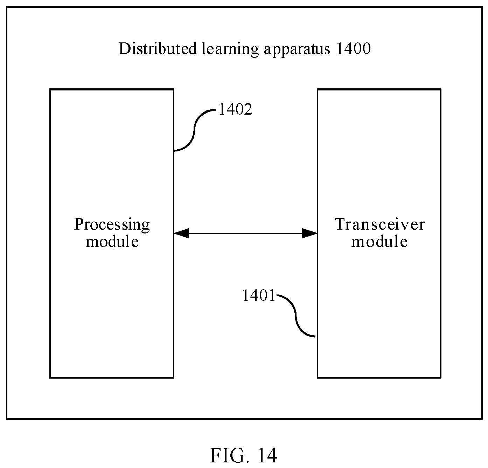

FIG. 14 is a schematic diagram of a structure of another distributed learning apparatus according to an embodiment of this application. For ease of description, FIG. 14 shows only main components of the distributed learning apparatus.

The distributed learning apparatus 1400 includes a transceiver module 1401 and a processing module 1402. The distributed learning apparatus 1400 may be the first node or the second node in the foregoing method embodiments. The transceiver module 1401 may also be referred to as a transceiver unit, and is configured to implement sending and receiving functions performed by the first node or the second node in any one of the foregoing method embodiments.

It should be noted that the transceiver module 1401 may include a receiving module and a sending module (not shown in FIG. 14). The receiving module is configured to receive data and/or signaling from a first node. The sending module is configured to send data and/or signaling to the first node. A specific implementation of the transceiver module is not specifically limited in this application. The transceiver module may include a transceiver circuit, a transceiver machine, a transceiver, or a communication interface.

The processing module 1402 may be configured to implement a processing function performed by the first node or the second node in any one of the foregoing method embodiments. The processing module 1402 may be a processor.

In this embodiment, the distributed learning apparatus 1400 is presented in a form of dividing function modules in an integrated manner. The "module" herein may be a specific ASIC, a circuit, a processor that executes one or more software or firmware programs, a memory, an integrated logic circuit, and/or another component that can provide the foregoing functions. In an embodiment, a person skilled in the art may figure out that the distributed learning apparatus 1400 may be in a form of the distributed learning apparatus 1300 shown in FIG. 13.

For example, the processor 1301 in the distributed learning apparatus 1300 shown in FIG. 13 may invoke computer-executable instructions stored in the memory 1302, so that the distributed learning method in the foregoing method embodiment is performed.

Specifically, functions/implementation processes of the transceiver module 1401 and the processing module 1402 in FIG. 14 may be implemented by the processor 1301 in the distributed learning apparatus 1300 shown in FIG. 13 by invoking computer-executable instructions stored in the memory 1302. Alternatively, functions/implementation processes of the processing module 1402 in FIG. 14 may be implemented by the processor 1301 in the distributed learning apparatus 1300 shown in FIG. 13 by invoking computer-executable instructions stored in the memory 1302, and functions/implementation processes of the transceiver module 1401 in FIG. 14 may be implemented by the transceiver 1303 in the distributed learning apparatus 1300 shown in FIG. 13.

Because the distributed learning apparatus 1400 provided in this embodiment may perform the foregoing distributed learning method, for technical effects that can be obtained by the distributed learning apparatus 1400, refer to the foregoing method embodiments. Details are not described herein again.

In a possible design solution, the distributed learning apparatus 1400 shown in FIG. 14 may be used in the communication system shown in FIG. 1, and perform functions of the first node in the distributed learning method shown in FIG. 8 and/or FIG. 12(a), FIG. 12(b), and FIG. 12(c).

The processing module 1402 is configured to process first data by using the first data model to obtain first intermediate data.

The transceiver module 1401 is configured to send the first intermediate data to a second node through a first channel, where the first channel is updated based on error information of second intermediate data, information about the first channel, and the first intermediate data, the second intermediate data is a result of transmitting the first intermediate data to the second node through the first channel, and the first channel is a channel between the distributed learning apparatus and the second node.

Optionally, the distributed learning apparatus 1400 may further include a storage module (not shown in FIG. 14), and the storage module stores a program or instructions. When the processing module 1402 executes the program or the instructions, the distributed learning apparatus 1400 is enabled to perform functions of the first node in the distributed learning method shown in FIG. 3.

It should be noted that the distributed learning apparatus 1400 may be a first node, or may be, for example, a chip (system) or another component or assembly that may be arranged in the first node. This is not limited in this application.

In addition, for technical effects of the distributed learning apparatus 1400, refer to the technical effects of the distributed learning methods shown in FIG. 8, FIG. 12(a), FIG. 12(b), and FIG. 12(c). Details are not described herein again.

In another possible design solution, the distributed learning apparatus 1400 shown in FIG. 14 may be used in the communication system shown in FIG. 1, and perform functions of the second node in the distributed learning method shown in FIG. 8 and/or FIG. 12(a), FIG. 12(b), and FIG. 12(c).

The transceiver module 1401 is configured to receive second intermediate data through a first channel, where the second intermediate data is a result of transmitting first intermediate data sent by a first node to the distributed learning apparatus through the first channel, the first channel is updated based on error information of the second intermediate data, information about the first channel, and the first intermediate data, and the first channel is a channel between the first node and the distributed learning apparatus.

The processing module 1402 is configured to process the second intermediate data by using the second data model to obtain output data.

Optionally, the distributed learning apparatus 1400 may further include a storage module (not shown in FIG. 14), and the storage module stores a program or instructions. When the processing module 1402 executes the program or the instructions, the distributed learning apparatus 1400 is enabled to perform functions of the second node in the distributed learning method shown in FIG. 8, FIG. 12(a), FIG. 12(b), and FIG. 12(c).

It should be noted that the distributed learning apparatus 1400 may be a second node, or may be, for example, a chip (system) or another component or assembly that may be arranged in the second node. This is not limited in this application.

In addition, for technical effects of the distributed learning apparatus 1400, refer to the technical effects of the distributed learning methods shown in FIG. 8, FIG. 12(a), FIG. 12(b), and FIG. 12(c). Details are not described herein again.

An embodiment of this application provides a communication system. The communication system includes a first node and a second node.

The first node is configured to perform actions of the first node in the foregoing method embodiments. For specific execution methods and processes, refer to the foregoing method embodiments. Details are not described herein again.

The second node is configured to perform actions of the second node in the foregoing method embodiments. For specific execution methods and processes, refer to the foregoing method embodiments. Details are not described herein again.

An embodiment of this application provides a chip system. The chip system includes a processor and an input/output port. The processor may be configured to implement processing functions included in the distributed learning method provided in embodiments of this application, and the input/output port may be configured to perform sending and receiving functions included in the distributed learning method provided in embodiments of this application.

For example, the input port may be configured to implement receiving functions included in the distributed learning method provided in embodiments of this application, and the output port may be configured to implement sending functions included the distributed learning method provided in embodiments of this application.

In a possible design, the chip system further includes a memory, and the memory is configured to store program instructions and data for implementing the functions included in the distributed learning method provided in embodiments of this application.

The chip system may include a chip, or may include a chip and another discrete component.

An embodiment of this application provides a computer-readable storage medium. The computer-readable storage medium includes a computer program or instructions. When the computer program or the instructions are run on a computer, the distributed learning method provided in embodiments of this application is performed.

An embodiment of this application provides a computer program product. The computer program product includes a computer program or instructions. When the computer program or the instructions are run on a computer, the distributed learning method provided in embodiments of this application is performed.

It should be understood that the processor in embodiments of this application may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of illustrative rather than limitative descriptions, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing embodiments may be fully or partly implemented through software, hardware (such as a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or other programmable apparatuses. The computer instructions may be stored on a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of the appended claims.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a second node, or the like) to perform all or some of the steps in the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of the appended claims. Any variation or replacement readily figured out by a person skilled in the art within the technical scope disclosed in this application shall fall within the protection scope of the appended claims. Therefore, the protection scope of this application shall be subject to the protection scope of the claims.

# EP 4 318 310 B1

**Claims**

1. A distributed learning method, applied to a first node, wherein the first node comprises a processor and a first data model, wherein the first data model is a neural network, and the method comprises:

   processing (S801) first data by using the first data model to obtain first intermediate data; and
   sending (S802) the first intermediate data to a second node through a first channel, wherein the first channel is updated based (S1202a) on error information of second intermediate data, information about the first channel, and the first intermediate data, the second intermediate data is a result of transmitting the first intermediate data to the second node through the first channel, and the first channel is a first wireless communication channel between the first node and the second node,
   wherein the first channel comprises a second channel and a third channel, wherein the second channel is a second wireless communication channel and the third channel is a third wireless communication channel, and the method further comprises:

   updating the second channel based on the error information of the second intermediate data, information about the third channel, and the first intermediate data, and
   wherein the updating the second channel based on the error information of the second intermediate data, information about the third channel, and the first intermediate data comprises:

   receiving (S1204) first information sent by the second node, wherein the first information is determined by the second node based on the error information of the second intermediate data and the information about the third channel, wherein error information includes a gradient or a normalized value of the gradient; and
   updating the second channel based on the first information and the first intermediate data.

2. The distributed learning method according to claim 1, wherein the updating the second channel based on the error information of the second intermediate data, information about the third channel, and the first intermediate data comprises:

   receiving a first signal from the second node through the first channel, wherein the first signal is a signal obtained after a second signal is transmitted to the first node through the first channel, and the second signal comprises a signal generated by mapping the error information of the second intermediate data to an air interface resource; obtaining first information based on the first signal, wherein the first information is determined based on the error information of the second intermediate data and the information about the third channel; and updating the second channel based on the first information and the first intermediate data.

3. The distributed learning method according to claim 2, wherein the method further comprises:
   sending a third signal to the second node through the first channel, wherein the third signal comprises a signal generated by mapping third intermediate data to an air interface resource, and the third intermediate data is for updating the first channel.

4. The distributed learning method according to any one of claims 1 to 3, wherein the method further comprises:
   updating the first data model based on error information of the first intermediate data to obtain a new first data model.

5. The distributed learning method according to claim 4, wherein the method further comprises:

   receiving second information sent by the second node, wherein the second information is for obtaining the error information of the first intermediate data; wherein the second information comprises the error information of the first intermediate data; or
   the second information comprises the error information of the second intermediate data and the information about the first channel, and the error information of the second intermediate data and the information about the first channel are for determining the error information of the first intermediate data.

6. A distributed learning method, applied to a second node, wherein the second node comprises a processor and a second data model, wherein the second data model is a neural network, and the method comprises:

   receiving (S802) second intermediate data through a first channel, wherein the second intermediate data is a result of transmitting first intermediate data sent by a first node to the second node through the first channel, the first channel is updated based on error information of the second intermediate data, information about the first channel, and the first intermediate data, and the first channel is a first wireless communication channel between the first node and the second node; and

processing (S803) the second intermediate data by using the second data model to obtain output data, wherein the first channel comprises a second channel and a third channel, wherein the second channel is a second wireless communication channel and the third channel is a third wireless communication channel, and the method further comprises:

sending the error information of the second intermediate data and information about the third channel to the first node, wherein error information includes a gradient or a normalized value of the gradient.

7. The distributed learning method according to claim 6, wherein the sending the error information of the second intermediate data and information about the third channel to the first node comprises:

sending first information to the first node, wherein the first information is determined based on the error information of the second intermediate data and the information about the third channel; or
sending a first signal to the first node through the first channel, wherein the first signal comprises a signal generated by mapping the error information of the second intermediate data to an air interface resource.

8. The distributed learning method according to any one of claims 6 to 7, wherein the method further comprises:

receiving a second signal from the first node through the first channel, wherein the second signal is a signal obtained after a third signal is transmitted to the second node through the first channel, and the third signal is for determining the information about the first channel; and
obtaining the information about the first channel based on the second signal.

9. The distributed learning method according to any one of claims 6 to 8, wherein the method further comprises:

sending second information to the first node, wherein the second information is for obtaining error information of the first intermediate data;
wherein the second information comprises the error information of the first intermediate data; or
the second information comprises the error information of the second intermediate data and the information about the first channel, and the error information of the second intermediate data and the information about the first channel are for determining the error information of the first intermediate data.

10. The distributed learning method according to any one of claims 6 to 9, wherein the method further comprises:
updating the second data model based on the output data to obtain a new second data model.

11. A distributed learning apparatus (1300, 1400), wherein the distributed learning apparatus comprises a processor (1301, 1304, 1402), wherein the processor is coupled to a memory (1302);

the memory is configured to store a computer program; and
the processor is configured to execute the computer program stored in the memory, to perform the distributed learning method according to any one of claims 1 to 10.

12. A computer-readable storage medium, wherein the computer-readable storage medium comprises a computer program or instructions, and when the computer program or the instructions are run on a processor of a computer, the method according to any one of claims 1 to 10 is performed.

**Patentansprüche**

1. Verfahren für verteiltes Lernen, das auf einen ersten Knoten angewendet wird, wobei der erste Knoten einen ersten Prozessor und ein erstes Datenmodell umfasst, wobei das erste Datenmodell ein neuronales Netz ist und das Verfahren Folgendes umfasst:

Verarbeiten (S801) von ersten Daten unter Verwendung des ersten Datenmodells, um erste Zwischendaten zu erhalten; und

Senden (S802) der ersten Zwischendaten an einen zweiten Knoten über einen ersten Kanal, wobei der erste Kanal basierend (S1202a) auf Fehlerinformationen von zweiten Zwischendaten, Informationen über den ersten Kanal und den ersten Zwischendaten aktualisiert wird, die zweiten Zwischendaten ein Ergebnis der Übertragung der ersten Zwischendaten an den zweiten Knoten über den ersten Kanal sind und der erste Kanal ein erster Drahtloskommunikationskanal zwischen dem ersten Knoten und dem zweiten Knoten ist, wobei der erste Kanal einen zweiten Kanal und einen dritten Kanal umfasst, wobei der zweite Kanal ein zweiter Drahtloskommunikationskanal ist und der dritte Kanal ein dritter Drahtloskommunikationskanal ist und das Verfahren ferner Folgendes umfasst:

Aktualisieren des zweiten Kanals basierend auf den Fehlerinformationen der zweiten Zwischendaten, Informationen über den dritten Kanal und den ersten Zwischendaten und wobei das Aktualisieren des zweiten Kanals basierend auf den Fehlerinformationen der zweiten Zwischendaten, Informationen über den dritten Kanal und den ersten Zwischendaten Folgendes umfasst:

Empfangen (S1204) von ersten Informationen, die durch den zweiten Knoten gesendet werden, wobei die ersten Informationen durch den zweiten Knoten basierend auf den Fehlerinformationen der zweiten Zwischendaten und den Informationen über den dritten Kanal bestimmt werden, wobei Fehlerinformationen einen Gradienten oder einen normalisierten Wert des Gradienten beinhalten; und Aktualisieren des zweiten Kanals basierend auf den ersten Informationen und den ersten Zwischendaten.

2. Verfahren für verteiltes Lernen nach Anspruch 1, wobei das Aktualisieren des zweiten Kanals basierend auf den Fehlerinformationen der zweiten Zwischendaten, Informationen über den dritten Kanal und den ersten Zwischendaten Folgendes umfasst:

Empfangen eines ersten Signals von dem zweiten Knoten über den ersten Kanal, wobei das erste Signal ein Signal ist, das nach Übertragung eines zweiten Signals an den ersten Knoten über den ersten Kanal erhalten wird, und das zweite Signal ein durch Abbilden der Fehlerinformationen der zweiten Zwischendaten auf eine Luftschnittstellenressource erzeugtes Signal umfasst; Erhalten von ersten Informationen basierend auf dem ersten Signal, wobei die ersten Informationen basierend auf den Fehlerinformationen der zweiten Zwischendaten und den Informationen über den dritten Kanal bestimmt werden; und Aktualisieren des zweiten Kanals basierend auf den ersten Informationen der ersten Zwischendaten.

3. Verfahren für verteiltes Lernen nach Anspruch 2, wobei das Verfahren ferner Folgendes umfasst: Senden eines dritten Signals an den zweiten Knoten über den ersten Kanal, wobei das dritte Signal ein durch Abbilden von dritten Zwischendaten auf eine Luftschnittstellenressource erzeugtes Signal umfasst und die dritten Zwischendaten zum Aktualisieren des ersten Kanals dienen.

4. Verfahren für verteiltes Lernen nach einem der Ansprüche 1 bis 3, wobei das Verfahren ferner Folgendes umfasst: Aktualisieren des ersten Datenmodells basierend auf Fehlerinformationen der ersten Zwischendaten, um ein neues erstes Datenmodell zu erhalten.

5. Verfahren für verteiltes Lernen nach Anspruch 4, wobei das Verfahren ferner Folgendes umfasst:

Empfangen von zweiten Informationen, die durch den zweiten Knoten gesendet werden, wobei die zweiten Informationen zum Erhalten der Fehlerinformationen der ersten Zwischendaten dienen; wobei die zweiten Informationen die Fehlerinformationen der ersten Zwischendaten umfassen; oder die zweiten Informationen die Fehlerinformationen der zweiten Zwischendaten und die Informationen über den ersten Kanal umfassen und die Fehlerinformationen der zweiten Zwischendaten und die Informationen über den ersten Kanal zum Bestimmen der Fehlerinformationen der ersten Zwischendaten dienen.

6. Verfahren für verteiltes Lernen, das auf einen zweiten Knoten angewendet wird, wobei der zweite Knoten einen Prozessor und ein zweites Datenmodell umfasst, wobei das zweite Datenmodell ein neuronales Netz ist und das Verfahren Folgendes umfasst:

Empfangen (S802) von zweiten Zwischendaten über einen ersten Kanal, wobei die zweiten Zwischendaten ein Ergebnis des Übertragens von durch einen ersten Knoten gesendeten ersten Zwischendaten an den zweiten Knoten über den ersten Kanal sind, der erste Kanal basierend auf Fehlerinformationen der zweiten Zwischendaten, Informationen über den ersten Kanal und den ersten Zwischendaten aktualisiert wird und der erste Kanal ein Drahtloskommunikationskanal zwischen dem ersten Knoten und dem zweiten Knoten ist; und

Verarbeiten (S803) der zweiten Zwischendaten unter Verwendung des zweiten Datenmodells, um Ausgangsdaten zu erhalten,

wobei der erste Kanal einen zweiten Kanal und einen dritten Kanal umfasst, wobei der zweite Kanal ein zweiter Drahtloskommunikationskanal ist und der dritte Kanal ein dritter Drahtloskommunikationskanal ist und das Verfahren ferner Folgendes umfasst: Senden der Fehlerinformationen der zweiten Zwischendaten und von Informationen über den dritten Kanal an den ersten Knoten, wobei Fehlerinformationen einen Gradienten oder einen normalisierten Wert des Gradienten beinhalten.

7. Verfahren für verteiltes Lernen nach Anspruch 6, wobei das Senden der Fehlerinformationen der zweiten Zwischendaten und von Informationen über den dritten Kanal an den ersten Knoten Folgendes umfasst:

Senden von ersten Informationen an den ersten Knoten, wobei die ersten Informationen basierend auf den Fehlerinformationen der zweiten Zwischendaten und den Informationen über den dritten Kanal bestimmt werden; oder

Senden eines ersten Signals an den ersten Knoten über den ersten Kanal, wobei das erste Signal ein durch Abbilden der Fehlerinformationen der zweiten Zwischendaten auf eine Luftschnittstellenressource erzeugtes Signal umfasst.

8. Verfahren für verteiltes Lernen nach einem der Ansprüche 6 bis 7, wobei das Verfahren ferner Folgendes umfasst:

Empfangen eines zweiten Signals von dem ersten Knoten über den ersten Kanal, wobei das zweite Signal ein Signal ist, das nach Übertragung eines dritten Signals an den zweiten Knoten über den ersten Kanal erhalten wird, und das dritte Signal zum Bestimmen der Informationen über den ersten Kanal dient; und

Erhalten der Informationen über den ersten Kanal basierend auf dem zweiten Signal.

9. Verfahren für verteiltes Lernen nach einem der Ansprüche 6 bis 8, wobei das Verfahren ferner Folgendes umfasst:

Senden von zweiten Informationen an den ersten Knoten, wobei die zweiten Informationen zum Erhalten von Fehlerinformationen der ersten Zwischendaten dienen;

wobei die zweiten Informationen die Fehlerinformationen der ersten Zwischendaten umfassen; oder

die zweiten Informationen die Fehlerinformationen der zweiten Zwischendaten und die Informationen über den ersten Kanal umfassen und die Fehlerinformationen der zweiten Zwischendaten und die Informationen über den ersten Kanal zum Bestimmen der Fehlerinformationen der ersten Zwischendaten dienen.

10. Verfahren für verteiltes Lernen nach einem der Ansprüche 6 bis 9, wobei das Verfahren ferner Folgendes umfasst: Aktualisieren des zweiten Datenmodells basierend auf den Ausgangsdaten, um ein neues zweites Datenmodell zu erhalten.

11. Einrichtung (1300, 1400) für verteiltes Lernen, wobei die Einrichtung für verteiltes Lernen einen Prozessor (1301, 1304, 1402) umfasst, wobei der Prozessor mit einem Speicher (1302) gekoppelt ist;

der Speicher zum Speichern eines Computerprogramms ausgelegt ist; und

der Prozessor dazu ausgelegt ist, das in dem Speicher gespeicherte Computerprogramm auszuführen, um das Verfahren für verteiltes Lernen nach einem der Ansprüche 1 bis 10 durchzuführen.

12. Computerlesbares Speichermedium, wobei das computerlesbare Speichermedium ein Computerprogramm oder Anweisungen umfasst und bei Ausführung des Computerprogramms oder der Anweisungen auf einem Prozessor eines Computers das Verfahren nach einem der Ansprüche 1 bis 10 durchgeführt wird.

**Revendications**

1. Procédé d'apprentissage distribué, appliqué à un premier nœud, le premier nœud comprenant un processeur et un premier modèle de données, le premier modèle de données étant un réseau de neurones, et le procédé comprenant :

le traitement (S801) de premières données à l'aide du premier modèle de données pour obtenir des premières données intermédiaires ; et

l'envoi (S802) des premières données intermédiaires à un second nœud au moyen d'un premier canal, le premier canal étant mis à jour (S1202a) sur la base d'informations d'erreur de deuxièmes données intermédiaires, d'informations concernant le premier canal, et des premières données intermédiaires, les deuxièmes données intermédiaires étant un résultat de la transmission des premières données intermédiaires au second nœud au moyen du premier canal, et le premier canal étant un premier canal de communication sans fil entre le premier nœud et le second nœud,

le premier canal comprenant un deuxième canal et un troisième canal, le deuxième canal étant un deuxième canal de communication sans fil et le troisième canal étant un troisième canal de communication sans fil, et le procédé comprenant en outre :

la mise à jour du deuxième canal sur la base des informations d'erreur des deuxièmes données intermédiaires, d'informations concernant le troisième canal, et des premières données intermédiaires, et

la mise à jour du deuxième canal sur la base des informations d'erreur des deuxièmes données intermédiaires, d'informations concernant le troisième canal, et des premières données intermédiaires comprenant :

la réception (S1204) de premières informations envoyées par le second nœud, les premières informations étant déterminées par le second nœud sur la base des informations d'erreur des deuxièmes données intermédiaires et des informations concernant le troisième canal, les informations d'erreur comprenant un gradient ou une valeur normalisée du gradient ; et

la mise à jour du deuxième canal sur la base des premières informations et des premières données intermédiaires.

2. Procédé d'apprentissage distribué selon la revendication 1, la mise à jour du deuxième canal sur la base des informations d'erreur des deuxièmes données intermédiaires, d'informations concernant le troisième canal, et des premières données intermédiaires comprenant :

la réception d'un premier signal en provenance du second nœud au moyen du premier canal, le premier signal étant un signal obtenu après qu'un deuxième signal a été transmis au premier nœud au moyen du premier canal, et le deuxième signal comprenant un signal généré en mettant en correspondance les informations d'erreur des deuxièmes données intermédiaires avec une ressource d'interface radio ;

l'obtention de premières informations sur la base du premier signal, les premières informations étant déterminées sur la base des informations d'erreur des deuxièmes données intermédiaires et des informations concernant le troisième canal ; et

la mise à jour du deuxième canal sur la base des premières informations et des premières données intermédiaires.

3. Procédé d'apprentissage distribué selon la revendication 2, le procédé comprenant en outre :
l'envoi d'un troisième signal au second nœud au moyen du premier canal, le troisième signal comprenant un signal généré en mettant en correspondance des troisièmes données intermédiaires avec une ressource d'interface radio, et les troisièmes données intermédiaires étant destinées à la mise à jour du premier canal.

4. Procédé d'apprentissage distribué selon l'une quelconque des revendications 1 à 3, le procédé comprenant en outre :
la mise à jour du premier modèle de données sur la base d'informations d'erreur des premières données intermédiaires pour obtenir un nouveau premier modèle de données,

5. Procédé d'apprentissage distribué selon la revendication 4, le procédé comprenant en outre :

la réception de secondes informations envoyées par le second nœud, les secondes informations étant destinées à obtenir les informations d'erreur des premières données intermédiaires ; les secondes informations comprenant les informations d'erreur des premières données intermédiaires ; ou

les secondes informations comprenant les informations d'erreur des deuxièmes données intermédiaires et les informations concernant le premier canal, et les informations d'erreur des deuxièmes données intermédiaires et les informations concernant le premier canal étant destinées à déterminer les informations d'erreur des premières données intermédiaires.

6. Procédé d'apprentissage distribué, appliqué à un second nœud, le second nœud comprenant un processeur et un second modèle de données, le second modèle de données étant un réseau de neurones, et le procédé comprenant :

la réception (S802) de deuxièmes données intermédiaires au moyen d'un premier canal, les deuxièmes données intermédiaires étant un résultat de la transmission de premières données intermédiaires envoyées par un premier nœud au second nœud au moyen du premier canal, le premier canal étant mis à jour sur la base d'informations d'erreur des deuxièmes données intermédiaires, d'informations concernant le premier canal, et des premières données intermédiaires, et le premier canal étant un premier canal de communication sans fil entre le premier nœud et le second nœud ; et

le traitement (S803) des deuxièmes données intermédiaires à l'aide du second modèle de données pour obtenir des données de sortie,
le premier canal comprenant un deuxième canal et un troisième canal, le deuxième canal étant un deuxième canal de communication sans fil et le troisième canal étant un troisième canal de communication sans fil, et le procédé comprenant en outre :
l'envoi des informations d'erreur des deuxièmes données intermédiaires et d'informations concernant le troisième canal au premier nœud, les informations d'erreur comprenant un gradient ou une valeur normalisée du gradient.

7. Procédé d'apprentissage distribué selon la revendication 6, l'envoi des informations d'erreur des deuxièmes données intermédiaires et d'informations concernant le troisième canal au premier nœud comprenant :

l'envoi de premières informations au premier nœud, les premières informations étant déterminées sur la base des informations d'erreur des deuxièmes données intermédiaires et des informations concernant le troisième canal ; ou
l'envoi d'un premier signal au premier nœud au moyen du premier canal, le premier signal comprenant un signal généré en mettant en correspondance les informations d'erreur des deuxièmes données intermédiaires avec une ressource d'interface radio.

8. Procédé d'apprentissage distribué selon l'une quelconque des revendications 6 et 7, le procédé comprenant en outre :

la réception d'un deuxième signal en provenance du premier nœud au moyen du premier canal, le deuxième signal étant un signal obtenu après qu'un troisième signal a été transmis au second nœud au moyen du premier canal, et le troisième signal étant destiné à déterminer les informations concernant le premier canal ; et
l'obtention des informations concernant le premier canal sur la base du deuxième signal.

9. Procédé d'apprentissage distribué selon l'une quelconque des revendications 6 à 8, le procédé comprenant en outre :

l'envoi de secondes informations au premier nœud, les secondes informations étant destinées à obtenir des informations d'erreur des premières données intermédiaires ;
les secondes informations comprenant les informations d'erreur des premières données intermédiaires ; ou
les secondes informations comprenant les informations d'erreur des deuxièmes données intermédiaires et les informations concernant le premier canal, et les informations d'erreur des deuxièmes données intermédiaires et les informations concernant le premier canal étant destinées à déterminer les informations d'erreur des premières données intermédiaires.

10. Procédé d'apprentissage distribué selon l'une quelconque des revendications 6 à 9, le procédé comprenant en outre :
la mise à jour du second modèle de données sur la base des données de sortie pour obtenir un nouveau second modèle de données.

11. Appareil d'apprentissage distribué (1300, 1400), l'appareil d'apprentissage distribué comprenant un processeur (1301, 1304, 1402), le processeur étant couplé à une mémoire (1302) ;

la mémoire étant configurée pour stocker un programme informatique ; et
le processeur étant configuré pour exécuter le programme informatique stocké dans la mémoire, afin de réaliser le procédé d'apprentissage distribué selon l'une quelconque des revendications 1 à 10.

12. Support de stockage lisible par ordinateur, le support de stockage lisible par ordinateur comprenant un programme informatique ou des instructions, et lorsque le programme informatique ou les instructions sont exécutés sur un processeur d'un ordinateur, le procédé selon l'une quelconque des revendications 1 à 10 est réalisé.

FIG. 1

FIG. 2

Loss
function

Starting point

Optimal point

Parameter of a neural network

FIG. 3

Layer j

Layer i $\frac{\partial L}{\partial s_i}$

j1

$W_{ij1}$

$W_{ij2}$

$\frac{\partial L}{\partial w_{ij2}}$ j2

$W_{ij3}$

i

j3

$W_{ij4}$

j4

FIG. 4

Data model

Segmentation point

Input

Output

Segmentation
point

Input

Channel

Output

First data model
First node

Second data model
Second node

FIG. 5

Control | Controller

x
Input

z
$g_1$

$\Phi$

c
$g_2$

y
Output

First data model, $\theta_1$
First node

First channel

Second data model, $\theta_2$
Second node

FIG. 6

$h_1$

z   $g_{1,1}^{(1)}$   $\phi_1$   $g_{2,1}^{(1)}$   c

$\phi_2$

x

Input

$g_{1,N}^{(2)}$   $\phi_N$   $g_{2,N}^{(2)}$

y

Output

First data model, $\theta_1$
First node

Second data model, $\theta_2$
Second node

$h_2$

First channel

FIG. 7

First node

Second node

S801. Process first data by using a first data model to obtain first intermediate data

S802. Send the first intermediate data

First channel

S802. Second intermediate data

S803. Process the second intermediate data by using a second data model to obtain output data

FIG. 8

First node

Second node

Step (a)

$z = f_{\theta_1}(x)$

Step (b). Send $z = f_{\theta_1}(x)$

First channel

Step (b). Send $c = \left(h + \sum_{n=1}^{N} g_{2,n} \times g_{1,n} \times \phi_n\right) \times f_{\theta_1}(x) + k$

Step (c)

$c = \left(h + \sum_{n=1}^{N} g_{2,n} \times g_{1,n} \times \phi_n\right) \times f_{\theta_1}(x) + k$

$y = f_{\theta_2}\left(\left(h + \sum_{n=1}^{N} g_{2,n} \times g_{1,n} \times \phi_n\right) \times f_{\theta_1}(x) + k\right)$

Step (d)

Update a parameter

$\theta_2' = \theta_2 - \eta \times \frac{\partial L}{\partial \theta_2}$

Step (e)

Calculate a gradient

$\frac{\partial L}{\partial y} \times \frac{\partial y}{\partial c}$

Step (m). Send a pilot

Step (n)

Perform channel estimation to obtain $h$, $h + g_{2,n} \times g_{1,n}$, and $h + \sum_{n=1}^{N} g_{2,n} \times g_{1,n} \times \phi_n$

Step (f)

Determine $\frac{\partial L}{\partial y} \times \frac{\partial y}{\partial c} \times g_{2,n} \times g_{1,n}$

Step (g). Send $\frac{\partial L}{\partial y} \times \frac{\partial y}{\partial c} \times g_{2,n} \times g_{1,n}$

Step (h)

Determine a gradient $\left(\frac{\partial L}{\partial y} \times \frac{\partial y}{\partial c} \times g_{2,n} \times g_{1,n} \times f_{\theta_1}(x)\right)^*$ of a parameter of a channel

TO FIG. 9B

TO FIG. 9B

FIG. 9A

EP 4 318 310 B1

Step (i)

Determine an updated value

$$\phi_n' \leftarrow \phi_n - \eta \times \left( \frac{\partial L}{\partial y} \times \frac{\partial y}{\partial c} \times g_{2,n} \times g_{1,n} \times f_{\theta_1}(x) \right)^*$$

of the parameter of the channel

Step (k). Send

$$\left( \frac{\partial L}{\partial y} \times \frac{\partial y}{\partial c} \times g_{2,n} \times g_{1,n} \times f_{\theta_1}(x) \right)^* \text{ or } \phi_n' \leftarrow \phi_n - \eta \times \left( \frac{\partial L}{\partial y} \times \frac{\partial y}{\partial c} \times g_{2,n} \times g_{1,n} \times f_{\theta_1}(x) \right)^*$$

Step (l)

Update a parameter
$\phi_n$, $\beta_n$, and $\psi_n$
of the channel

Step (j)

Update a parameter
$\phi_n$, $\beta_n$, and $\psi_n$
of the channel

Step (q)

Obtain $\dfrac{\partial L}{\partial y} \times \dfrac{\partial y}{\partial c} \times \dfrac{\partial c}{\partial z}$

Step (p). Send $\dfrac{\partial L}{\partial y} \times \dfrac{\partial y}{\partial c} \times \dfrac{\partial c}{\partial z}$

Step (o)

Determine a gradient

$$\frac{\partial L}{\partial y} \times \frac{\partial y}{\partial c} \times \frac{\partial c}{\partial z} \times \frac{\partial z}{\partial \theta_1}$$

$$\theta_1' = \theta_1 - \eta \times \frac{\partial L}{\partial y} \times \frac{\partial y}{\partial c} \times \frac{\partial c}{\partial z} \times \frac{\partial z}{\partial \theta_1}$$

of a parameter of a first data model, and update the parameter $\theta_1'$ of the first data model

FIG. 9B

EP 4 318 310 B1

FIG. 10A

Step (i)

Determine an updated value

$$\phi_n' \leftarrow \phi_n - \eta \times \left( \frac{\partial L}{\partial y} \times \frac{\partial y}{\partial c} \times g_{2,n} \times g_{1,n} \times f_{\theta_1}(x) \right)^*$$

of the parameter of the channel

Step (j)

Update a parameter
$\phi_n$, $\beta_n$, and $\psi_n$
of the channel

Step (p). Send a conjugate $\left( \frac{\partial L}{\partial y} \times \frac{\partial y}{\partial c} \right)^*$ of $\frac{\partial L}{\partial y} \times \frac{\partial y}{\partial c}$ ,

and set $\phi_1$ to $\phi_N$ respectively to values obtained
after previous training

Step (p)

Obtain $\left( \frac{\partial L}{\partial y} \times \frac{\partial y}{\partial c} \right)^* \left( h + \sum_{n=1}^{N} g_{2,n} \times g_{1,n} \times \phi_n \right)$

which is equivalent to

$$\frac{\partial L}{\partial y} \times \frac{\partial y}{\partial c} \times \frac{\partial c}{\partial z} = \frac{\partial L}{\partial y} \times \frac{\partial y}{\partial c} \left( h + \sum_{n=1}^{N} g_{2,n} \times g_{1,n} \times \phi_n \right)^*$$

First
channel

Step (o)

Determine a gradient $\frac{\partial L}{\partial y} \times \frac{\partial y}{\partial c} \times \frac{\partial c}{\partial z} \times \frac{\partial z}{\partial \theta_1}$

$$\theta_1' = \theta_1 - \eta \times \frac{\partial L}{\partial y} \times \frac{\partial y}{\partial c} \times \frac{\partial c}{\partial z} \times \frac{\partial z}{\partial \theta_1}$$

of a parameter of a first data model,
and update the parameter $\theta_1'$ of the
first data model

FIG. 10B

EP 4 318 310 B1

FIG. 11A

CONT. FROM FIG. 11A

**Step (v)**

Determine an updated value

$$\phi_n' \leftarrow \phi_n - \eta \times \left(\frac{\partial L}{\partial y} \times \frac{\partial y}{\partial c} \times g_{2,n} \times g_{1,n} \times f_{\theta_1}(x)\right)^*$$

of the parameter of the channel

**Step (w)**

Update a parameter $\phi_n$, $\beta_n$, and $\psi_n$ of the channel

Step (p). Send conjugate $\left(\frac{\partial L}{\partial y} \times \frac{\partial y}{\partial c}\right)^*$ of $\frac{\partial L}{\partial y} \times \frac{\partial y}{\partial c}$, and set $\phi_1$ to $\phi_N$ respectively to values obtained after previous training

First channel

CONT. FROM FIG. 11A

**Step (p)**

Obtain $\left(\frac{\partial L}{\partial y} \times \frac{\partial y}{\partial c}\right)^* \left(h + \sum_{n=1}^{N} g_{2,n} \times g_{1,n} \times \phi_n\right)$ which is equivalent to

$$\frac{\partial L}{\partial y} \times \frac{\partial y}{\partial c} \times \frac{\partial c}{\partial z} = \frac{\partial L}{\partial y} \times \frac{\partial y}{\partial c} \times \left(h + \sum_{n=1}^{N} g_{2,n} \times g_{1,n} \times \phi_n\right)^*$$

**Step (o)**

Determine a gradient

$$\frac{\partial L}{\partial y} \times \frac{\partial y}{\partial c} \times \frac{\partial c}{\partial z} \times \frac{\partial z}{\partial \theta_1}$$

$$\theta_1' = \theta_1 - \eta \times \frac{\partial L}{\partial y} \times \frac{\partial y}{\partial c} \times \frac{\partial c}{\partial z} \times \frac{\partial z}{\partial \theta_1}$$

of a parameter of a first data model, and update the parameter $\theta_1'$ of the first data model

**FIG. 11B**

First node

Second node

S1201. Update a second data model based on output data to obtain a new second data model.

S1204. Send first information

S1202a. Obtain a new channel based on error information of second intermediate data, information about a first channel, and first intermediate data

S1207. Send second information

S1203. Update a first data model based on error information of the first intermediate data to obtain a new first data model

FIG. 12(a)

First node

Second node

S1201. Update a second data
model based on output data to
obtain a new second data model.

S1205. Third
signal

First
channel

S1205. Send a
fourth signal

S1202a. Obtain a new channel
based on error information of
second intermediate data,
information about a first channel,
and first intermediate data

S1208. Eighth signal

First
channel

S1208. Send a
seventh signal

S1203. Update a first data model
based on error information of the
first intermediate data to obtain a
new first data model

FIG. 12(b)

First node

Second node

S1201. Update a second data model based on output data to obtain a new second data model.

S1206. Send a fifth signal

First channel

S1206. Sixth signal

S1202b. Obtain a new channel based on error information of second intermediate data, information about a first channel, and first intermediate data

S1208. Eighth signal

First channel

S1208. Send a seventh signal

S1203. Update a first data model based on error information of the first intermediate data to obtain a new first data model

FIG. 12(c)

Distributed learning apparatus 1300

1301

Processor

CPU 0

CPU1

1304

Processor

CPU 0

CPU1

1302

Memory

1303

Transceiver

FIG. 13

Distributed learning apparatus 1400

Processing module

1402

Transceiver module

1401

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEBASTIAN DÖRNER et al.** *Deep Learning-Based Communication Over the Air*